# EUROPEAN PATENT SPECIFICATION

(11) **EP 4 546 322 B1**
(45) Date of publication and mention of the grant of the patent: **07.10.2026**
(21) Application number: 23846880.5
(22) Date of filing: 14.07.2023
(51) Int. Cl.: G09G 3/32, H05B 45/325, G09G 3/20

(54) **ELECTRONIC DEVICE AND METHOD FOR OPERATING SAME**
ELEKTRONISCHE VORRICHTUNG UND VERFAHREN ZUM BETRIEB DAVON
DISPOSITIF ÉLECTRONIQUE ET SON PROCÉDÉ DE FONCTIONNEMENT

(30) Priority: 27.07.2022 KR 20220092956; 16.09.2022 KR 20220116915
(43) Date of publication of application: 30.04.2025
(73) Proprietor: Samsung Electronics Co., Ltd., Suwon-si, Gyeonggi-do 16677 (KR)
(72) Inventor: HER, Yongkoo, Suwon-si, Gyeonggi-do 16677 (KR); KIM, Kiwoo, Suwon-si, Gyeonggi-do 16677 (KR); PARK, Seoungyong, Suwon-si, Gyeonggi-do 16677 (KR); LEE, Hongkook, Suwon-si, Gyeonggi-do 16677 (KR); JANG, Euntaek, Suwon-si, Gyeonggi-do 16677 (KR)
(74) Representative: Gulde & Partner
(86) International application number: PCT/KR2023/010073
(87) International publication number: WO 2024/025221

(56) References cited:
- KR-A- 20160 059 406
- KR-A- 20160 084 547
- KR-A- 20170 013 354
- KR-A- 20170 108 182
- KR-A- 20210 123 178
- KR-A- 20220 045 501
- US-A1- 2017 330 509
- US-A1- 2020 251 043
- US-A1- 2021 049 957
- US-A1- 2023 154 387
- US-A1- 2023 154 387
- US-B1- 11 087 701

## Description

### [Technical Field]

The disclosure relates to an electronic device including a display for implementing augmented reality and a method of operating the same.

### [Background Art]

As the functional gap in electronic devices diminishes, electronic devices that provide various functions are being developed to satisfy consumers' purchasing desires. With advances in display technology, electronic devices have been developed that include a display (e.g., augmented reality (AR) glasses, head mounted devices (HMDs)) that can enable AR. An electronic device including a display capable of implementing augmented reality may combine an AR image displayed on the display with a real scene (e.g., an external image, an external real-world scene) to be perceived by the user's eyes. A user may simultaneously see an AR image displayed on a display and a real scene (e.g., an external image, an external real-world scene), and experience augmented reality by combining an AR image with a real scene (e.g., an external image, an external real-world scene).

The above information is presented as background information only to assist with an understanding of the disclosure. No determination has been made, and no assertion is made, as to whether any of the above might be applicable as prior art with regard to the disclosure.

Prior art concerned with PWM for displays (particularly for glasses) is known from US 2020/251043 A1, US 2021/049957 A1, US 2017/330509 Al and KR 2021 0123178 A.

### [Disclosure of Invention]

### [Solution to Problem]

The present invention is directed to subject matter as defined in the claims. An electronic device including an augmented reality (AR) glass may display a bright luminance of a center portion of a screen and a relatively dim luminance of a peripheral portion of the screen relative to the center portion of the screen. Users' eyes may perceive a dimmer image of the peripheral portion of the screen, making it difficult to see objects displayed in the peripheral portion.

Aspects of the disclosure are to address at least the above-mentioned problems and/or disadvantages and to provide at least the advantages described below. Accordingly, aspect of the disclosure is to provide an electronic device and a method of operating the same that can improve display quality by displaying substantially the same luminance on the center portion of the screen and the peripheral portion of the screen (or reducing luminance deviation).

Additional aspects will be set forth in part in the description which follows and, in part, will be apparent from the description, or may be learned by practice of the presented embodiments.

An electronic device and a method of operating the same, according to an embodiment of the disclosure, improves display quality by displaying substantially the same luminance on the center portion of the screen and the peripheral portion of the screen (or reducing luminance deviation).

Other aspects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiments of the disclosure will be more apparent from the following description taken in conjunction with the accompanying drawings, in which:
FIG. 1 is a block diagram of an electronic device in a network environment, according to an embodiment of the disclosure;
FIG. 2 is a view illustrating an electronic device according to an embodiment of the disclosure;
FIG. 3 is a block diagram of a display module according to an embodiment of the disclosure;
FIG. 4 is a view illustrating a display portion according to an embodiment of the disclosure;
FIG. 5 is a view illustrating that a luminance of a center portion of a screen is displayed brightly, and a luminance of a peripheral portion of the screen is displayed relatively dimly compared to the center portion of the screen according to an embodiment of the disclosure;
FIG. 6 is a view illustrating luminance deviation occurring in a center portion of a screen and a peripheral portion of the screen according to an embodiment of the disclosure;
FIG. 7 is a view illustrating an example of compensating for luminance deviation between a center portion of a screen and a peripheral portion of the screen according to an embodiment of the disclosure;
FIG. 8 is a view illustrating an example of compensating for luminance deviation between a center portion of a screen and a peripheral portion of the screen according to an embodiment of the disclosure;
FIG. 9 is a view illustrating a display according to an embodiment of the disclosure;
FIG. 10 is a view illustrating driving signals of a display according to an embodiment of the disclosure;
FIG. 11 is a view illustrating adjusting a luminance of a center portion, a peripheral portion, and a middle portion of a display according to an embodiment of the disclosure;
FIG. 12 is a view illustrating a display according to an embodiment of the disclosure;
FIG. 13 is a view illustrating driving signals for driving pixels disposed in a center portion of a display according to an embodiment of the disclosure;
FIG. 14 is a view illustrating driving signals for driving pixels disposed in a middle portion of a display according to an embodiment of the disclosure;
FIG. 15 is a view illustrating driving signals for driving pixels disposed in a peripheral portion of a display according to an embodiment of the disclosure;
FIG. 16 is a view illustrating that a luminance of an entire area of a display (e.g., a full screen) is uniformized according to an embodiment of the disclosure;
FIG. 17 is a view illustrating a display according to an embodiment of the disclosure;
FIG. 18 is a view illustrating driving signals for driving pixels disposed in a center portion of a display according to an embodiment of the disclosure;
FIG. 19 is a view illustrating a display according to an embodiment of the disclosure;
FIG. 20 is a view illustrating a display and method of operating the same according to an embodiment of the disclosure;
FIG. 21 is a view illustrating a display and method of operating the same according to an embodiment of the disclosure;
FIG. 22 is a view illustrating a method of operating an electronic device including a display according to an embodiment of the disclosure; and
FIG. 23 is a view illustrating a method of operating an electronic device including a display according to an embodiment of the disclosure.

Throughout the drawings, like reference numerals will be understood to refer to like parts, components, and structures.

### [Mode for the Invention]

The following description with reference to the accompanying drawings is provided to assist in a comprehensive understanding of the various embodiments of the disclosure. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following descriptions and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only.

It is to be understood that the singular forms "a," "an," and "the" include plural referents unless the context clearly dictates otherwise. Thus, for example, reference to "a component surface " includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

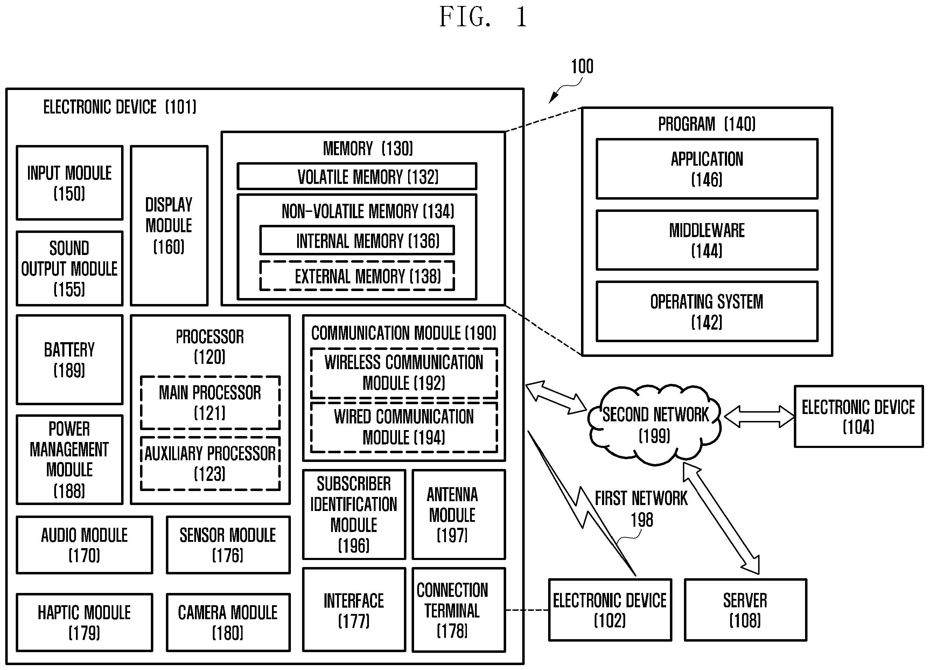

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 executes, for example, software (e.g., a program 140) to control at least one other component (e.g., a hardware or software component) of the electronic device 101 coupled with the processor 120, and performs various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 is adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and includes, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 includes, for example, a microphone, a mouse, a keyboard, a key (e.g., a button), or a digital pen (e.g., a stylus pen).

The sound output module 155 may output sound signals to the outside of the electronic device 101. The sound output module 155 includes, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 includes, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 includes, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 includes, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 includes, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 includes, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 includes, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth-generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter-wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, is selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices includes, for example, a portable communication device (e.g., a smartphone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module is implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) invokes at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As disclosed herein the term "augmented reality" may refer to presenting a computer-generated virtual image overlaid on a real-world, physical environment space or a real-world object as a single image.

As disclosed herein, the term "augmented reality display device" refers to a device capable of expressing augmented reality, and may include not only augmented reality glasses in the form of eyeglasses worn by a user, but also a head mounted display apparatus, an augmented reality helmet, and the like. The augmented reality display device is being useful in everyday life, such as searching for information, guiding directions, and taking pictures. In addition, the augmented reality glasses, in which the augmented reality display device is implemented in the form of glasses, may be worn as a fashion item and used in both indoor and outdoor activities.

As disclosed herein, the term "real scene" (e.g., external image, external real-world scene) refers to a scene in the real world as viewed by an observer or user through an electronic device (e.g., augmented reality (AR) glass, augmented reality display device), which may include a real-world object.

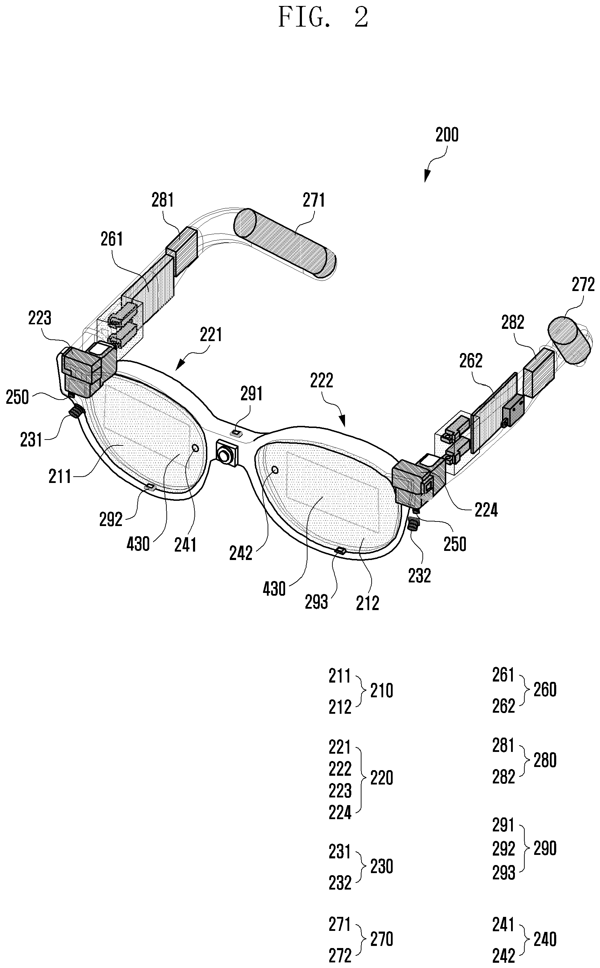

As disclosed herein, an "AR image (or virtual image)" may be an image generated through a display portion (e.g., a display portion 220 in FIG. 2) (e.g., a display engine). The AR image (or virtual image) may include both static and dynamic images. The AR image (or virtual image) may be an image that is overlaid on a real scene (e.g., an external image, an external real-world scene) to show information on a real-world object in the real scene (e.g., an external image, an external real-world scene), or information on an operation of the augmented reality device, a control menu, or the like.

FIG. 2 is a view illustrating the electronic device according to an embodiment of the disclosure.

Referring to FIG. 2, an electronic device 200 according to various embodiments of the disclosure may include an AR glass. For example, the electronic device 200 includes a head mounted device (HMD).

As an example, an electronic device 200 according to various embodiments of the disclosure may include a glass portion 210, a display portion 220, a camera portion for recognition 230, an eye tracking (ET) camera portion 240, an LED light 250, a printed circuit board unit (PCB) portion 260, a battery portion 270, a speaker portion 280, and a microphone portion 290.

In an embodiment, the glass portion 210 may include a first glass 211 (e.g., a glass for the right eye), a second glass 212 (e.g., a glass for the left eye), and a third glass 213 (e.g., a glass for the left eye). For example, the glass portion 210 is positioned in front of the display portion 220 to protect the display portion 220. For example, the first glass 211 and/or the second glass 212 is/are formed of a glass plate or polymer, and may be transparent or semi-transparent. According to an embodiment, the first glass 211 and the second glass 212 may be connected and integrally formed. For example, the glass portion 210 adjusts the transmission of external light incident on the display portion 220.

In an embodiment, the display portion 220 may include a first display portion 221 for the right eye and a second display portion 222 for the left eye.

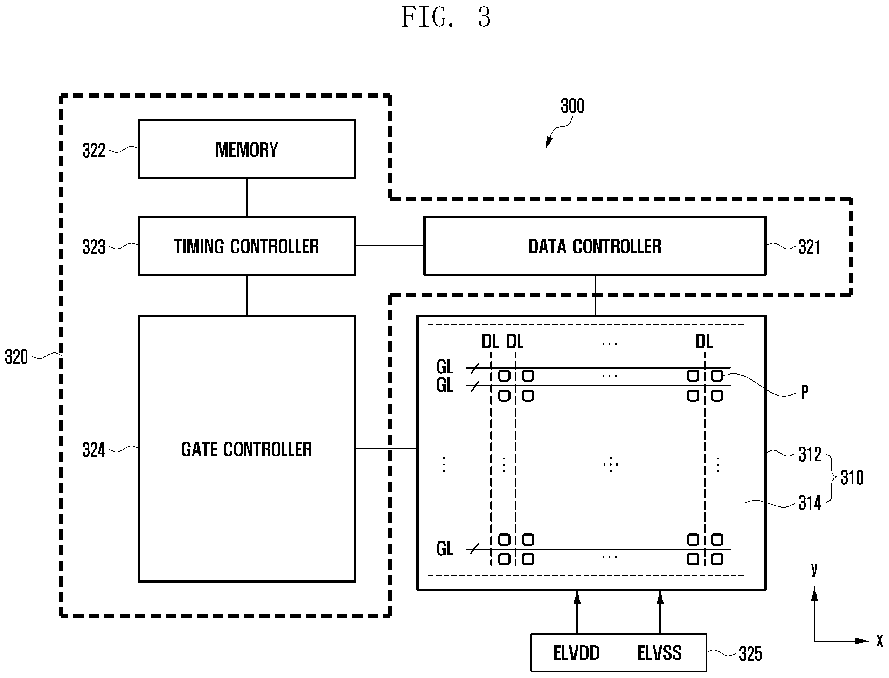

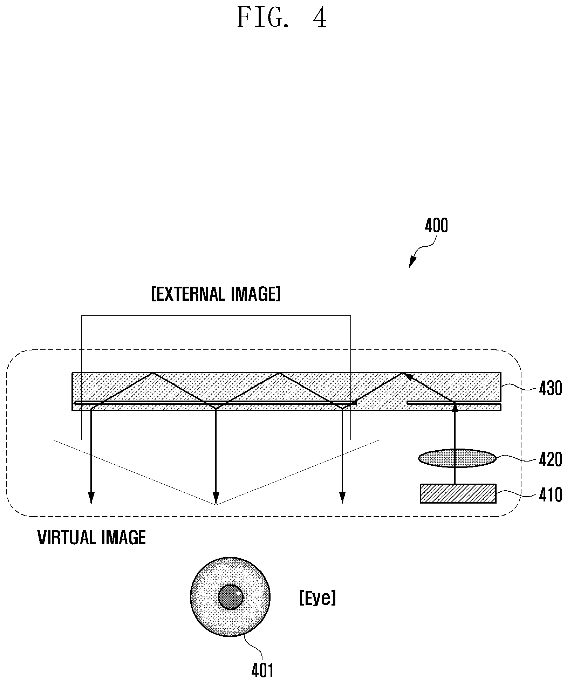

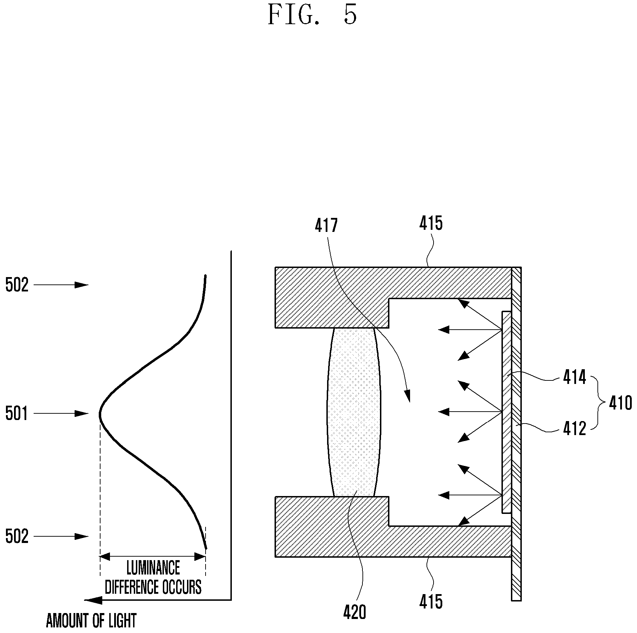

Each of the display portions 221 and 222 may include a display (e.g., display 310 in FIG. 3, display 410 in FIGS. 4 and 5), a projection lens (e.g., projection lens 420 in FIG. 4), combiner optics (e.g., combiner optics 430 in FIG. 4), and an optical barrier (e.g., optical barrier 415 in FIG. 5). For example, the first display portion 221 and the second display portion 222 includes substantially the same constituent elements (e.g., displays 310 and 410, projection lens 420, combiner optics 430, optical barrier 440). Therefore, in the description of the constituent elements of the display portions 221 and 222 and an operation method thereof, a single display portion may be described without distinguishing between a display portion for the right eye and a display portion for the left eye.

For example, a display for the right eye (e.g., display 310 in FIG. 3, display 410 in FIG. 4) and a display for the left eye (e.g., display 310 in FIG. 3, display 410 in FIG. 4) include the same configuration. Therefore, in the description of the constituent elements of the displays 310 and 410 and an operation method thereof, a single display may be described without distinguishing between a display for the right eye and a display for the left eye.

For example, the displays 310 and 410 include a liquid crystal on silicon (LCoS), a light emitting diode (LED) on silicon (LEDoS), an organic light emitting diode (OLED), a micro light emitting diode (micro LED), or a digital mirror device (DMD).

For example, when the displays 310 and 410 are made of one of a digital mirror display device or a silicon liquid crystal display device, the electronic device 200 includes a light source to emit light to a screen output area of a display. For example, when the displays 310 and 410 are made of one of an organic light emitting diode or a micro LED that is capable of generating light on its own, a user is provided with a good quality AR image without including a separate light source.

In an embodiment, when the displays 310 and 410 are implemented as an organic light emitting diode or micro LED, a light source is not required, which may reduce in weight of the electronic device 200. The user may use the electronic device 200 in the state of wearing the electronic device 200 on the face.

In an embodiment, the camera portion for recognition 230 may include a first camera for recognition 231 and a second camera for recognition 232. As an example, the camera portion for recognition 230 may include a global shutter (GS) camera, which is a camera used for head tracking, hand detection and tracking, and spatial recognition in three degrees of freedom (3DoF), six degrees of freedom (6DoF). As a stereo camera is required for head tracking and spatial recognition, the camera portion for recognition 230 may be configured with two cameras (e.g., first camera for recognition 231 and second camera for recognition 232).

In an embodiment, the eye tracking camera portion 240 may include a first eye tracking (ET) camera 241 (e.g., a right eye camera for recognition) and a second ET camera 242 (e.g., a left eye camera for recognition). For example, the eye tracking camera portion 240 detects the user's eyes (e.g., right eye and left eye) and track the movement of eyes. The eye tracking camera portion 240 may be used to track the movement of eyes, which allows a center of the AR image displayed on the electronic device 200 (e.g., AR glass) to be positioned according to a direction in which the user is gazing.

In an embodiment, the LED light 250 may be attached to a frame of the electronic device 200 (e.g., AR glass). The LED light 250 may emit infrared wavelengths to facilitate smooth detection of the user's eyes when the eye tracking camera portion 240 takes a picture of the user's eyes. In an embodiment, the LED light 250 may be used as a means to supplement ambient brightness when the surroundings are taken with the camera portion for recognition 230.

In an embodiment, the display portion 220 may include a first display driving portion 223 for driving the displays 310 and 410 for the right eye (e.g., display driver integrated circuit (IC) 320 in FIG. 3), and a second display driving portion 224 for driving the displays 310 and 410 for the left eye.

In an embodiment, the PCB portion 260 may be disposed in a leg portion of the electronic device 200 (e.g., AR glass) and may include a first PCB 261 and a second PCB 262. For example, the PCB portion 260 includes at least one driving portion (e.g., a processor) and memory for controlling the glass portion 210, the camera portion for recognition 230, the eye tracking camera portion 240, the LED light 250, the speaker portion 280, and the microphone portion 290.

In an embodiment, the battery portion 270 may be disposed in a leg portion of the electronic device (e.g., AR glass) and may include a first battery 271 and a second battery 272. Power may be provided through the battery portion 270 to drive the glass portion 210, the display portion 220, the camera portion for recognition 230, the eye tracking camera portion 240, the LED light 250, the PCB portion 260, the speaker portion 280, and the microphone portion 290.

In an embodiment, the speaker portion 280 may include a first speaker 281 (e.g., a right speaker) and a second speaker 282 (e.g., a left speaker). For example, the speaker portion 280 outputs sounds under the control of the driving portion of the PCB portion 260.

In an embodiment, the microphone portion 290 may include a first microphone 291 (e.g., a top microphone), a second microphone 292 (e.g., a right microphone), and a third microphone 293 (e.g., a left microphone). For example, the user's voice and external sounds are converted into electrical signals through the microphone portion 290. For example, the first microphone 291 (e.g., a top microphone), the second microphone 292 (e.g., a right microphone), and the third microphone 293 (e.g., a left microphone) may include a condenser, dynamic (moving coil and ribbon), piezoelectric, or micro-electro mechanical systems (MEMS) type of microphone.

FIG. 3 is a block diagram of a display module, according to an embodiment of the disclosure.

A display module 300 illustrated in FIG. 3 may include embodiments that are at least partially similar to or different from the display module 160 illustrated in FIG. 1.

Referring to FIG. 3, the display module 300 may include a display 310 for displaying an AR image (e.g., display 410 in FIG. 4), and a display driver IC 320 (hereinafter referred to as 'DDI 320') for controlling the display 310.

In an embodiment, the display 310 may include a display substrate 312 (e.g., display substrate 412 in FIG. 5) and an active layer 314 (e.g., active layer 414 in FIG. 5) disposed on the display substrate 312 to display an image.

In an embodiment, the DDI 320 may include a data controller 321, memory 322, a timing controller 323, a gate controller 324, and a power supply device 325 for supplying power (ELVDD, ELVSS).

For example, at least some of the data controller 321, memory 322, timing controller 323, and gate controller 324 are included in the DDI 320, and at least some may be included in the display 310. For example, when at least some of the data controller 321, memory 322, timing controller 323, and gate controller 324 are included in the display 310, the disposition thereof may be in a non-display area (e.g., a bezel area) of the display 310.

According to an embodiment, the display 310 may include multiple gate lines GL and multiple data lines DL. For example, the multiple data lines DL are formed in a first direction (e.g., y-axis direction, vertical direction in FIG. 3) and disposed at designated intervals. For example, the multiple gate lines GL are formed in a second direction substantially perpendicular to the first direction (e.g., x-axis direction, horizontal direction in FIG. 3) and disposed at designated intervals.

According to an embodiment, a pixel P may be disposed in each of partial areas of the display 310 where the multiple gate lines GL and the multiple data lines DL intersect each other.

According to an embodiment, each pixel P may be electrically connected to the gate line GL and the data line DL to display a designated gradation.

In an embodiment, the power supply device 325 may generate a driving voltage (ELVDD, ELVSS) for illuminating multiple pixels P disposed on the display 310. The power supply device 325 may supply a driving voltage (ELVDD, ELVSS) to the display 310.

According to an embodiment, the pixels P may receive scan signals and light emission signals through the gate line GL and data signals through the data line DL. According to an embodiment, the pixels P may receive a high potential voltage (e.g., ELVDD voltage) and a low potential voltage (e.g., ELVSS voltage) as a power source to drive the micro LED (light emitting diode) (or organic light emitting diode (OLED)).

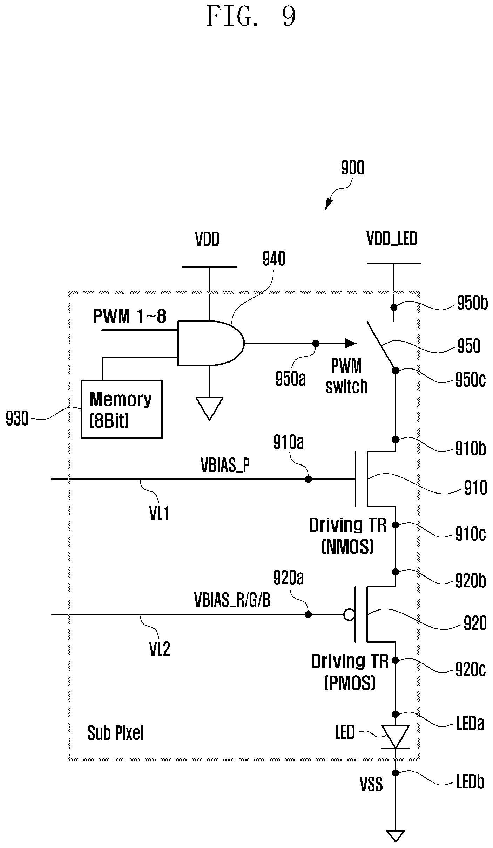

According to an embodiment, each pixel P may include a micro LED (or OLED) (e.g., LED in FIG. 9), a pixel driving circuit for driving the micro LED (or OLED) (e.g., first driving transistor 910, second driving transistor 920, memory 930, PWM signal outputting unit 940, and PWM signal switch 950 in FIG. 9).

According to an embodiment, the pixel driving circuit disposed at each pixel P may control the micro LED (or OLED) to be turned on (e.g., in an enabled state) or off (e.g., in a disabled state) on the basis of scan signals and light emission signals.

According to an embodiment, the micro-LED (or OLED) of each pixel P may display a gradation (e.g., luminance) corresponding to a data signal for a one-frame period (or a portion of a one-frame period) when in a turned-on state (e.g., in an enabled state).

According to an embodiment, the data controller 321 may drive multiple data lines DL. According to an embodiment, the data controller 321 may receive at least one synchronization signal, and a data signal (e.g., digital image data) from the timing controller 323 or the processor (e.g., processor 120 in FIG. 1). According to an embodiment, the data controller 321 may determine a data voltage (data) corresponding to an input data signal (e.g., analogue image data) using a reference gamma voltage and a designated gamma curve. According to an embodiment, the data controller 321 may supply the data voltage (data) to each pixel P by applying the data voltage (data) to multiple data lines DL.

According to an embodiment, the gate controller 324 may drive multiple gate lines GL. According to an embodiment, the gate controller 324 may receive at least one synchronization signal from the timing controller 323 or the processor 120. According to an embodiment, the gate controller 324 may generate multiple gate signals sequentially on the basis of the synchronization signal, and may generate multiple light emission signals sequentially. The gate controller 324 may sequentially supply the generated gate signals and light emission signals to the pixels through the gate lines GL. For example, each gate line GL may include scan signal lines to which scan signals are applied and light emission signal lines to which light emission signals are applied.

According to an embodiment, the timing controller 323 may control drive timing of the data controller 321 and the gate controller 324. According to an embodiment, the timing controller 323 may receive data signals from the processor (e.g., processor 120 in FIG. 1) in a unit of one frame. According to an embodiment, the timing controller 323 may convert the data signal (e.g., digital image data) input from the processor 120 to correspond to a resolution of the display 310, and supply the converted data signal to the data controller 321.

FIG. 4 is a view illustrating a display portion according to an embodiment of the disclosure.

FIG. 5 is a view illustrating that a luminance of a center portion of a screen is displayed brightly, and a luminance of a peripheral portion of the screen is displayed relatively dimly compared to the center portion of the screen according to an embodiment of the disclosure.

Referring to FIGS. 4 and 5, the display portion 400 according to an embodiment of the disclosure may include a display 410 (e.g., display 310 in FIG. 3), a projection lens 420, combiner optics 430, and an optical barrier 415 (e.g., a barrel). For example, a display portion for the right eye and a display portion for the left eye includes the same configuration.

In an embodiment, the display 410 may include a display substrate 412 (e.g., display substrate 312 in FIG. 3) and an active layer 414 (e.g., active layer 314 in FIG. 3) disposed on the display substrate 412 to display an image.

In an embodiment, the projection lens 420 may guide a path of display light (e.g., an AR image) emitted from the display 410. For example, the projection lens 420 allows display light (e.g., an AR image) emitted from the display 410 to be incident on the combiner optics 430.

In an embodiment, a waveguide 417 may be formed by the optical barrier 415 (e.g., a barrel) to direct light to the user's eyes. The optical barrier 415 (e.g., a barrel) may prevent display light (e.g., an AR image) emitted from the display 410 from leaking to the outside, and may block ambient light from entering the waveguide 417.

In an embodiment, the combiner optics 430 may allow display light (e.g., an AR image) emitted from the display 410 and light from a real scene (e.g., an external image, an external real-world scene) to be combined and perceived by the user's eyes 401. The combiner optics 430 may guide light emitted from the display 410 (e.g., an AR image) to the user's eye 401. The combiner optics 430 may combine light from a real scene (e.g., an external image, an external real-world scene) coming through a first glass (e.g., first glass 211 in FIG. 2) and a second glass (e.g., second glass 212 in FIG. 2) with light emitted from the display 410 (e.g., an AR image). Display light (e.g., AR image) and light from a real scene (e.g., an external image, an external real-world scene) may be combined by the combiner optics 430 so that an augmented reality image is perceived by the user's eyes 401.

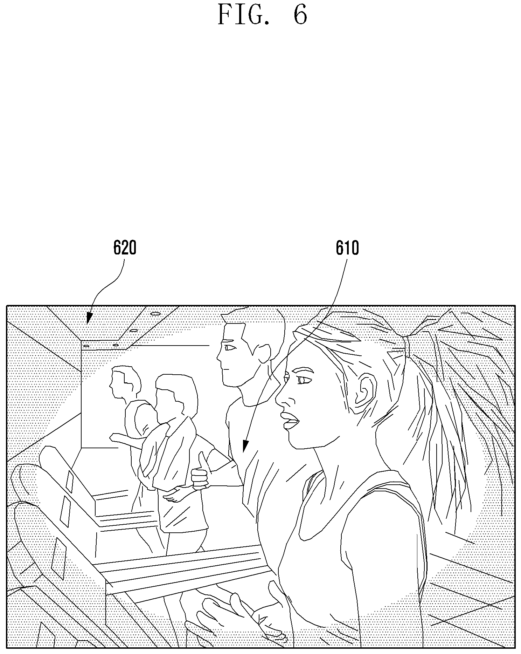

FIG. 6 is a view illustrating luminance deviation occurring in a center portion of a screen and a peripheral portion of the screen according to an embodiment of the disclosure.

Referring to FIGS. 5 and 6, as display light (e.g., an AR image) emitted from display 410 passes through the projection lens 420 and the combiner optics 430, a difference in luminance between a center portion 501 of a screen and a peripheral portion 502 of the screen may occur. With this difference in luminance between the center portion 501 of the screen and the peripheral portion 502 of the screen, an image 610 displayed on the center portion 501 of the screen may be displayed with a high luminance, and an image 620 displayed on the peripheral portion 502 of the screen may be displayed with a relatively low luminance. The image 610 displayed in the center portion 501 of the screen may be clearly visible to the user, while the image 620 displayed in the peripheral portion 502 of the screen may not be clearly visible to the user.

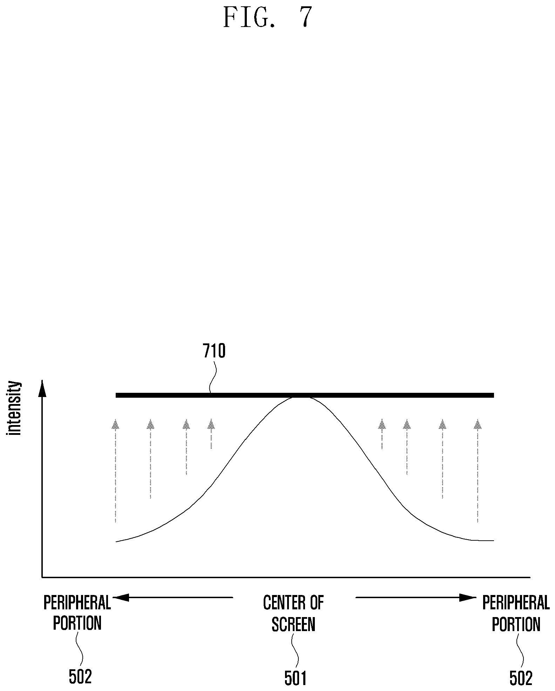

FIG. 7 is a view illustrating an example of compensating for luminance deviation between a center portion of a screen and a peripheral portion of the screen according to an embodiment of the disclosure.

Referring to FIG. 7, in order to view a good quality full screen image through the electronic device (e.g., electronic device 101 in FIG. 1 and electronic device 200 in FIG. 2) (e.g., AR glass), luminance and/or color correction may be required so that the luminance of the center portion 501 of the screen (e.g., center portion 501 of the screen in FIG. 5) and the peripheral portion 502 of the screen (e.g., peripheral portion 502 of the screen in FIG. 5) are substantially the same.

In an embodiment, when the luminance of the peripheral portion 502 of the screen (e.g., peripheral portion 502 of the screen in FIG. 5) is lower than the luminance of the center portion 501 of the screen (e.g., center portion 501 of the screen in FIG. 5), the luminance of the peripheral portion 502 of the screen may be increased so that a luminance across a full screen 710 is uniform. In this case, the luminance of the peripheral portion 502 of the screen may be increased to match the luminance of the center portion 501 of the screen.

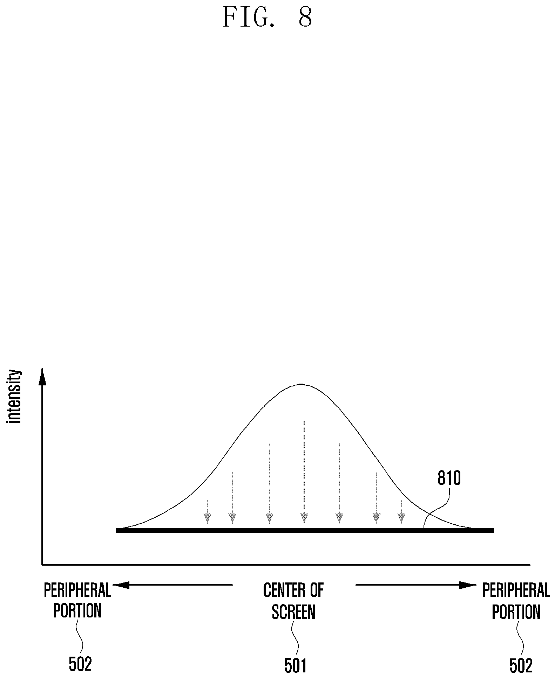

FIG. 8 is a view illustrating an example of compensating for luminance deviation between a center portion of a screen and a peripheral portion of the screen according to an embodiment of the disclosure.

Referring to FIG. 8, in an embodiment, when the luminance of the center portion 501 of the screen (e.g., center portion 501 of the screen of FIG. 5) is lower than the luminance of the peripheral portions 502 of the screen (e.g., peripheral portions 502 of the screen of FIG. 5), the luminance of the center portion 501 of the screen may be lowered so that a luminance across a full screen 810 is uniform. In this case, the luminance of the center portion 501 of the screen may be lowered to match the luminance of the peripheral portion 502 of the screen.

FIG. 9 is a view illustrating a display according to an embodiment of the disclosure.

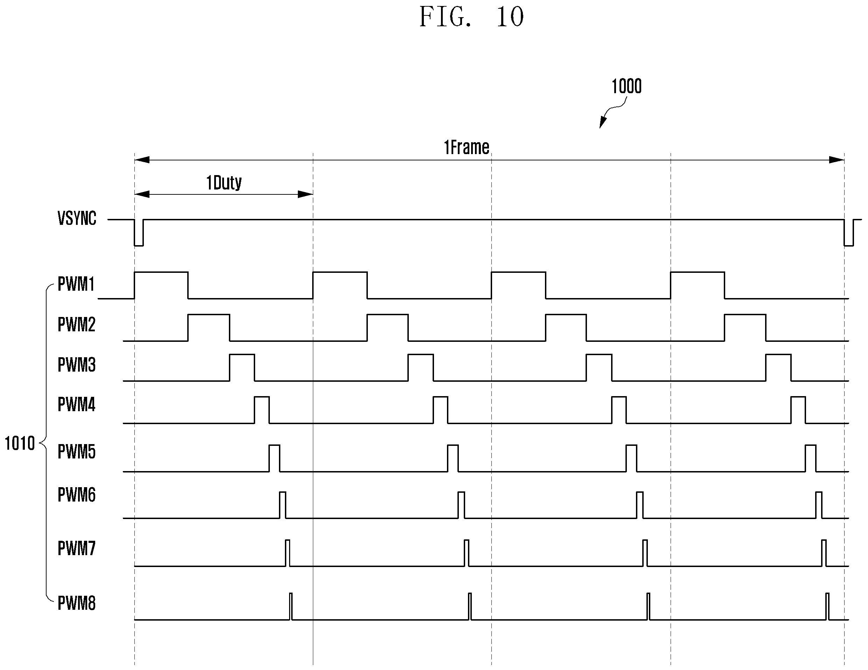

FIG. 10 is a view 1000 illustrating driving signals of a display according to an embodiment of the disclosure.

Referring to FIGS. 9 and 10, each pixel (e.g., pixel P in FIG. 3) of a display 900 according to an embodiment of the disclosure may include an LED (e.g., micro LED or OLED), and a pixel driving circuit for driving the LED. In an embodiment, the pixel driving circuit may include a first driving transistor 910, a second driving transistor 920, memory 930, a pulse width modulation (PWM) signal outputter 940, and a PWM signal switch 950.

In an embodiment, the first driving transistor 910 may be disposed at a node to which an LED is connected to improve IR-drop (or ohmic drop). A first terminal 910a of the first driving transistor 910 may be electrically connected to a first bias voltage line VL1, a second terminal 910b may be electrically connected to the PWM signal switch 950, and a third terminal 910c may be electrically connected to the second driving transistor 920. For example, the first terminal 910a of the first driving transistor 910 is supplied with a bias voltage (VBIAS_P). The first driving transistor 910 may be turned on or off by the bias voltage VBIAS_P.

In an embodiment, a first terminal 920a of the second driving transistor 920 may be electrically connected to a second bias voltage line VL2, a second terminal 920b may be electrically connected to the first driving transistor 910, and a third terminal 920c may be electrically connected to an anode terminal LEDa of the LED. For example, the first terminal 920a of the second driving transistor 920 is supplied with a bias voltage (VBIAS_R/G/B). The second driving transistor 920 may be turned on or off by the bias voltage VBIAS_R/G/B. A height of a PWM signal (e.g., a height of a pulse) may be adjusted by the bias voltage VBIAS_R/G/B supplied to the second driving transistor 920. The second driving transistor 920 may adjust emission intensity (e.g., emission luminance of the LED) of the LED.

In an embodiment, the first driving transistor 910 and the second driving transistor 920 may be different types of transistors. For example, the first driving transistor 910 is an N-type MOS transistor (NMOS) and the second driving transistor 920 is a P-type MOS transistor (PMOS). In addition to the above, the first driving transistor 910 may be a P-type MOS transistor (PMOS) and the second driving transistor 920 may be an N-type MOS transistor (NMOS).

In an embodiment, the anode terminal (LEDa) of the LED may be electrically connected to the second driving transistor 920, and a cathode terminal (LEDb) may be electrically connected to a VSS voltage line supplying a VSS voltage.

In an embodiment, the PWM signal outputting unit 940 may be supplied with a VDD voltage and a VSS voltage. For example, PWM signals 1010 of PWM1 to PWM8 are generated sequentially in response to a vertical synchronization signal (VSYNC), and PWM signals 1010 (e.g., PWM1 to PWM8) are supplied to a first terminal of the PWM signal outputting unit 940. A second terminal of the PWM signal outputting unit 940 may be supplied with gradation data stored in the memory 930. The PWM signal outputting unit 940 may select one of the PWM signals 1010 (e.g., PWM1 to PWM8) using a gradation value stored in the memory 930 and output the PWM signal to the PWM signal switch 950.

In an embodiment, a first terminal 950a of the PWM signal switch 950 may be electrically connected to an output terminal of the PWM signal outputting unit 940, a second terminal 950b may be electrically connected to an LED VDD voltage line supplying an LED VDD voltage (VDD_LED), and a third terminal 950c may be connected to the first driving transistor 910. For example, the PWM signal switch 950 is turned on or off by a PWM signal input to the first terminal 950a. For example, the PWM signal switch 950 is turned on or off according to an input PWM signal, thereby controlling a value of the LED VDD voltage (VDD_LED) to be output to the first driving transistor 910. The turned-on time of the PWM signal switch 950 may be adjusted by the PWM signal input to the first terminal 950a, and the light-emitting time of the LED may be adjusted by outputting the LED VDD voltage (VDD_LED) during the turned-on time.

In an embodiment, the memory 930 disposed at each pixel P may be configured with 8 bits, and the LEDs may be emitted in a gradation of 0 to 255 steps (e.g., 256 gradation) through the memory 930 of 8 bits.

In an embodiment, the number of bits of the memory 930 may be increased to increase the gradation that may be expressed. For example, when the memory 930 is configured with 9 bits, the LED is emitted at a gradation of 0 to 511 steps (e.g., 512 gradation), and when the memory 930 is configured with 10 bits, the LED may be emitted at a gradation of 0 to 1023 steps (e.g., 1024 gradation).

In an embodiment, the electronic device of the disclosure (e.g., electronic device 101 in FIG. 1 and electronic device 200 in FIG. 2) (e.g., AR glass) may adjust the emission luminance of LEDs of pixels disposed in a center portion of the display 900 (e.g., center portion 501 of the screen in FIGS. 7 and 8) and/or the emission luminance of LEDs of pixels disposed in a peripheral portion of the display 900 (e.g., peripheral portion 502 of the screen in FIGS. 7 and 8) so that the luminance of the center portion of the display 900 (e.g., center portion 501 of the screen in FIGS. 7 and 8) and the peripheral portion of the display 900 (e.g., peripheral portion 502 of the screen in FIGS. 7 and 8) are substantially the same.

For example, as illustrated in FIG. 7, the emission luminance of LEDs of pixels disposed in the peripheral portion of the display 900 (e.g., peripheral portion 502 of the screen in FIGS. 7 and 8) is increased so that the luminance of an entire area of the display 900 (e.g., a full screen) is uniform. In this case, the luminance of the peripheral portion 502 of the screen may be increased to match the luminance of the center portion 501 of the screen.

For example, as illustrated in FIG. 8, the emission luminance of LEDs of pixels disposed in the center portion of the display 900 (e.g., center portion 501 of the screen in FIGS. 7 and 8) are lowered so that the luminance of the entire area of the display 900 (e.g., a full screen) is uniform. In this case, the luminance of the center portion 501 of the screen may be lowered to match the luminance of the peripheral portion 502 of the screen.

In an embodiment, in order to increase the luminance of the peripheral portion 502 of the screen, the number of bits of the memory 930 disposed in the pixels of the peripheral portion 502 of the screen may be increased (e.g., 9 bits, 10 bits) compared to the number of bits of the memory 930 disposed in the pixels of the center portion 501 of the screen (e.g., 8 bits). As the display 900 increases in pixel per inch (PPI) to achieve high image quality, the area of individual pixels decreases, which may make it difficult to dispose two driving transistors (e.g., first driving transistor 910 and second driving transistor 920), nine or more bits of memory 930, signal wirings, and power wirings for each pixel. For example, as the PPI of the display 900 increases, the area of each pixel decreases, which makes it difficult to dispose 9 bits or more of memory.

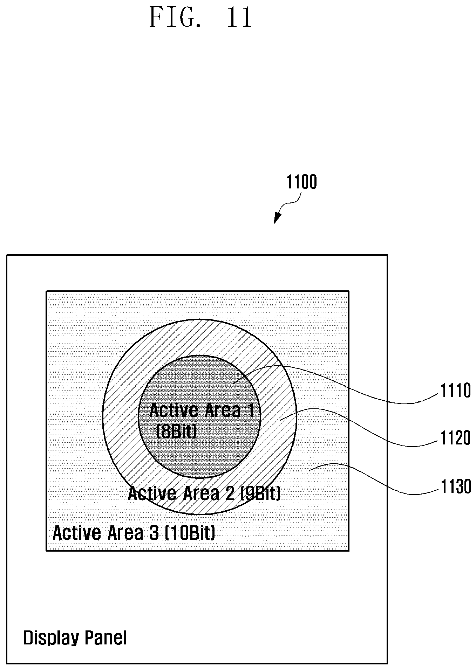

FIG. 11 is a view illustrating adjusting a luminance of a center portion, a peripheral portion, and a middle portion of a display according to an embodiment of the disclosure.

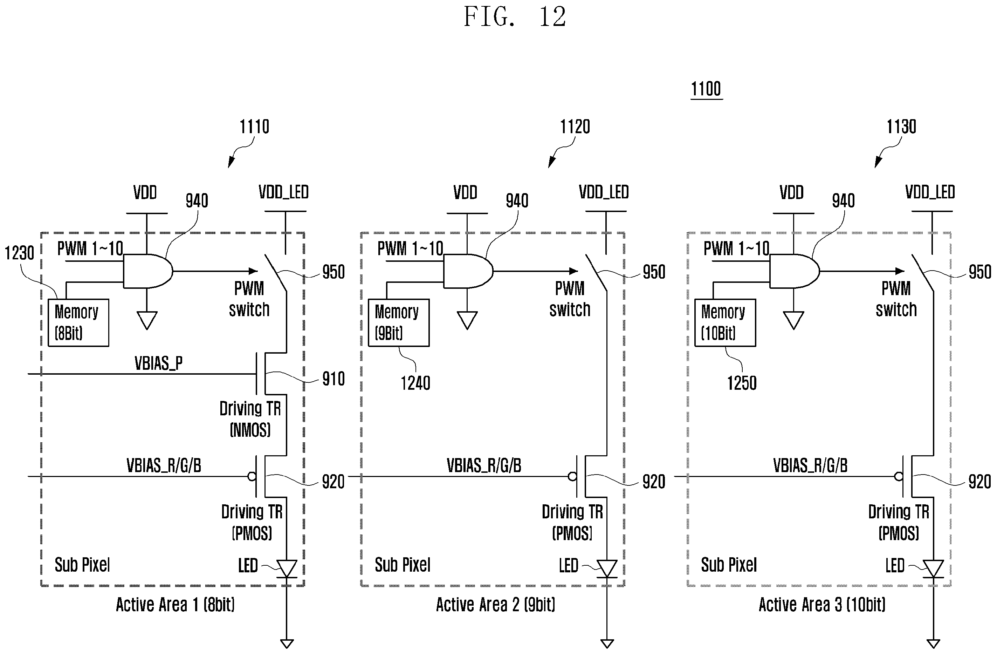

FIG. 12 is a view illustrating a display according to an embodiment of the disclosure.

Referring to FIGS. 11 and 12, in an embodiment, a display 1100 may include a center portion 1110 (e.g., first active area), a peripheral portion 1130 (e.g., third active area), and a middle portion 1120 (e.g., second active area) positioned between the center portion 1110 and the peripheral portion 1130.

In an embodiment, a first number of bits of first memory 1230 included in each pixel disposed in the center portion 1110 of the display (e.g., first active area), a second number of bits of second memory 1240 included in each pixel disposed in the middle portion 1120 of the display (e.g., second active area), and a third number of bits of third memory 1250 included in each pixel disposed in the peripheral portion 1130 of the display (e.g., third active area) may be different.

As claimed, the first number of bits (e.g., 8 bits) of the first memory 1230 included in each pixel disposed in the center portion 1110 (e.g., first active area) of the display is smaller than the second number of bits (e.g., 9 bits) of the second memory 1240 included in each pixel disposed in the middle portion 1120 (e.g., second active area) of the display.

As claimed, the second number of bits (e.g., 9 bits) of the second memory 1240 included in each pixel disposed in the middle portion 1120 (e.g., second active area) of the display is smaller than the third number of bits (e.g., 10 bits) of the third memory 1250 included in each pixel disposed in the peripheral portion 1130 (e.g., third active area) of the display.

In an embodiment, each pixel disposed in the center portion 1110 of the display (e.g., first active area) may include multiple signal wirings, multiple power wirings, an LED, the first driving transistor 910, the second driving transistor 920, the first memory 1230, the PWM signal outputting unit 940, and the PWM signal switch 950. For example, the first memory 1230 included in each pixel disposed in the center portion 1110 of the display (e.g., first active area) has a first number of bits (e.g., 8 bits).

In an embodiment, each pixel disposed in the middle portion 1120 of the display (e.g., second active area) may include multiple signal wirings, multiple power wirings, an LED, the second driving transistor 920, the second memory 1240, the PWM signal outputting unit 940, and the PWM signal switch 950. For example, the second memory 1240 included in each pixel disposed in the middle portion 1120 of the display (e.g., second active area) has a second number of bits (e.g., 9 bits) greater than the first number of bits. For example, the first driving transistor 910 is not disposed in the middle portion 1120 of the display (e.g., second active area), and the second memory 1240 may be formed greater by an area from which the first driving transistor 910 is excluded, thereby securing an additional one bit so that the second memory 1240 totals 9 bits. For example, a second area for disposition of a single driving transistor formed in the middle portion 1120 is reduced compared to a first area for disposition of multiple driving transistors formed in the center portion 1110, so that a free area is secured. A size (e.g., number of bits) of the second memory 1240 may increase by the secured free area with a reduction of one driving transistor.

In an embodiment, each pixel disposed in the peripheral portion 1130 of the display (e.g., third active area) may include multiple signal wirings, multiple power wirings, an LED, the second driving transistor 920, the third memory 1250, the PWM signal outputting unit 940, and the PWM signal switch 950. For example, the third memory 1250 included in each pixel disposed in the peripheral portion 1130 of the display (e.g., third active area) has a third number of bits (e.g., 10 bits) that is greater than the first number of bits. For example, the first driving transistor 910 may not be disposed in the peripheral portion 1130 of the display (e.g., third active area), and the third memory 1250 may be formed greater by an area from which the first driving transistor 910 is excluded, thereby securing an additional two bit so that the third memory 1250 may be made to total 10 bits. For example, a third area for disposition of a single driving transistor formed in the peripheral portion 1130 is reduced compared to a first area for disposition of multiple driving transistors formed in the center portion 1110, so that a free area is secured. A size (e.g., number of bits) of the third memory 1250 may increase by the secured free area with a reduction of one driving transistor.

In addition to the above, the first driving transistor 910 may not be disposed in the middle portion 1120 of the display (e.g., second active area), and the second memory 1240 may be made to total 10 bits. In addition to the above, the first driving transistor 910 may not be disposed in the peripheral portion 1130 of the display (e.g., third active area), so that the third memory 1250 may be made to total 11 to 12 bits.

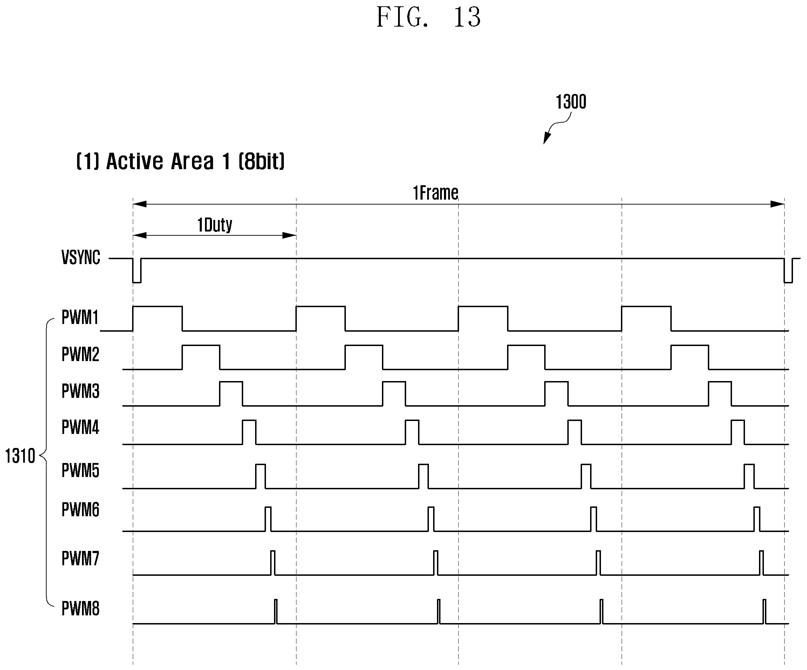

FIG. 13 is a view illustrating driving signals for driving pixels disposed in a center portion of a display according to an embodiment of the disclosure.

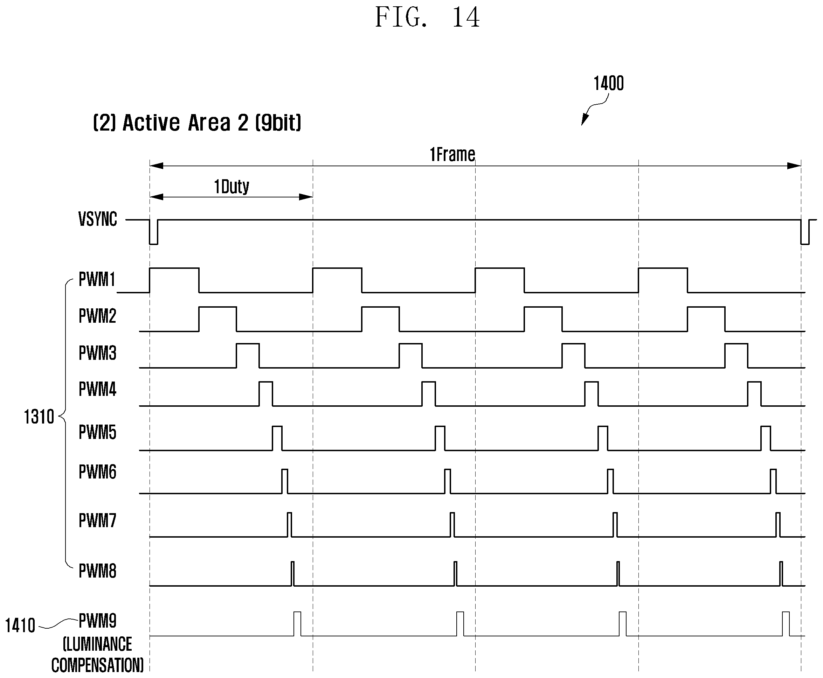

FIG. 14 is a view illustrating driving signals for driving pixels disposed in a middle portion of a display according to an embodiment of the disclosure.

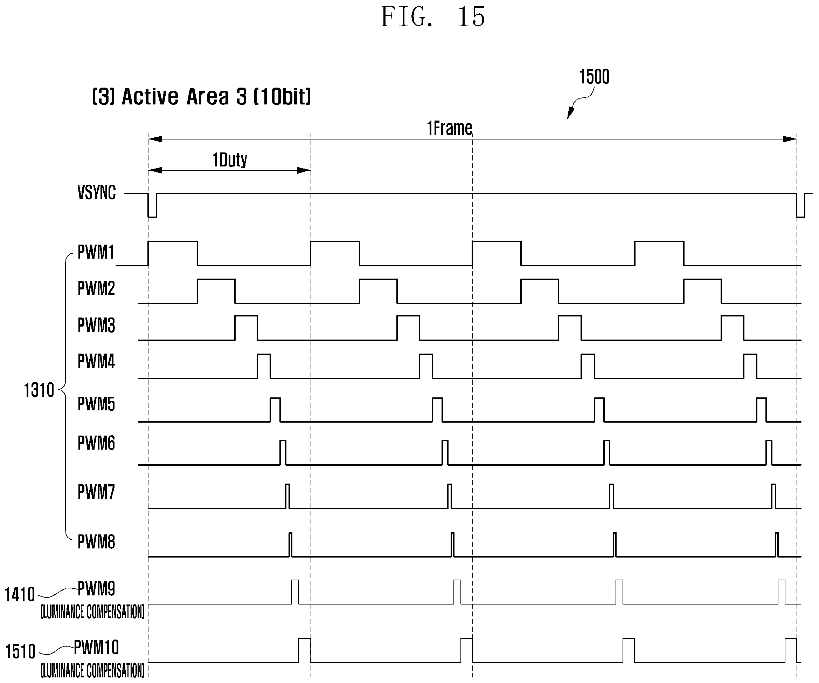

FIG. 15 is a view illustrating driving signals for driving pixels disposed in a peripheral portion of a display according to an embodiment of the disclosure.

Referring to FIGS. 12 to 15, in views 1300, 1400 and 1500, PWM signals having 1 to 10 pulse width types (PWM 1 to 10) may be input to the PWM signal outputting unit 940 of the center portion 1110 of the display (e.g., first active area), the middle portion 1120 of the display (e.g., second active area), and the peripheral portion 1130 of the display (e.g., third active area).

In an embodiment, the first memory 1230 disposed in the center portion 1110 of the display (e.g., first active area) has a first number of bits (e.g., 8 bits), so that the emission time of the LEDs may be adjusted using eight PWM signals 1310 (e.g., PWM1 to PWM8) selectively among ten PWM signals input to the PWM signal outputting unit 940.

In an embodiment, the second memory 1240 disposed in the middle portion 1120 of the display (e.g., second active area) has a second number of bits (e.g., 9 bits), so that the emission time of the LEDs may be adjusted using nine PWM signals 1310 and 1410 selectively among ten PWM signals input to the PWM signal outputting unit 940. For example, the middle portion 1120 of the display (e.g., second active area) has one additional PWM signal (e.g., a ninth PWM signal (PWM9) 1410 added to eight PWM signals 1310 (e.g., PWM1 to PWM8)) than the center portion 1110 of the display (e.g., first active area), so that the emission time of the LEDs is adjusted using a total of nine PWM signals 1310 and 1410. The LED of each pixel disposed in the middle portion 1120 of the display (e.g., second active area) may compensate for the luminance by adjusting the gradation to 9 bits.

In an embodiment, the third memory 1250 disposed in the peripheral portion 1130 of the display (e.g., third active area) has a third number of bits (e.g., 10 bits), which may adjust the emission time of the LEDs selectively using ten PWM signals 1310, 1410, and 1510 input to the PWM signal outputting unit 940. For example, the peripheral portion 1130 of the display (e.g., third active area) has two additional signals (e.g., a ninth PWM signal (PWM9) 1410 and a tenth PWM signal (PWM10) 1510 added to the eight PWM signals 1310 (e.g., PWM1 to PWM8)) than the center portion 1110 of the display (e.g., first active area), so that the emission time of the LEDs is adjusted using a total of ten PWM signals 1310, 1410, and 1510. The LED of each pixel disposed in the peripheral portion 1130 of the display (e.g., third active area) may compensate for the luminance by adjusting the gradation to 10 bits.

In an embodiment, the luminance of pixels around an interface between the center portion 1110 of the display (e.g., first active area) and the middle portion 1120 of the display (e.g., second active area) may be adjusted so that a luminance difference is not perceived at the interface.

In an embodiment, the luminance of pixels around an interface between the middle portion 1120 of the display (e.g., second active area) and the peripheral portion 1130 of the display (e.g., third active area) may be adjusted so that a luminance difference is not perceived at the interface.

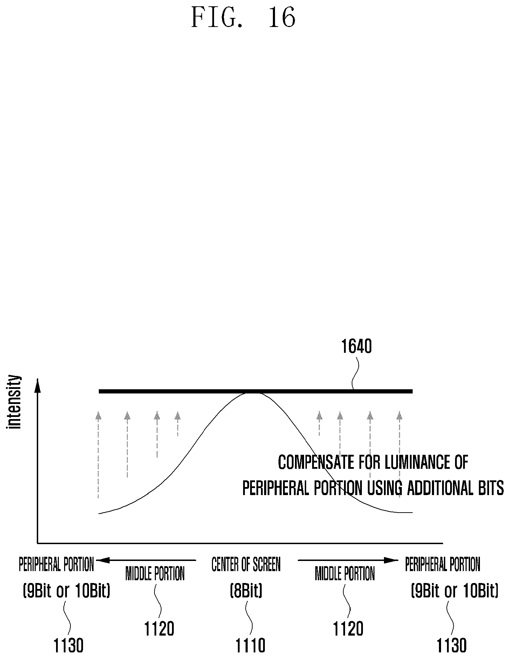

FIG. 16 is a view illustrating that a luminance of an entire area of a display (e.g., a full screen) is uniformized.

Referring to FIGS. 11, 12, and 16, the first memory 1230 disposed in the center portion 1110 (e.g., first active area) of the display may be formed with a first number of bits (e.g., 8 bits), the second memory 1240 disposed in the middle portion 1120 (e.g., second active area) of the display may be formed with a second number of bits (e.g., 9 bits), and the third memory 1250 disposed in the peripheral portion 1130 (e.g., third active area) of the display may be formed with a third number of bits (e.g., 10 bits).

The electronic device (e.g., electronic device 101 in FIG. 1 and electronic device 200 in FIG. 2), according to an embodiment of the disclosure, may compensate for the emission luminance of the LEDs with added bits of memory to uniformize the luminance of an entire area 1640 of the display (e.g., a full screen).

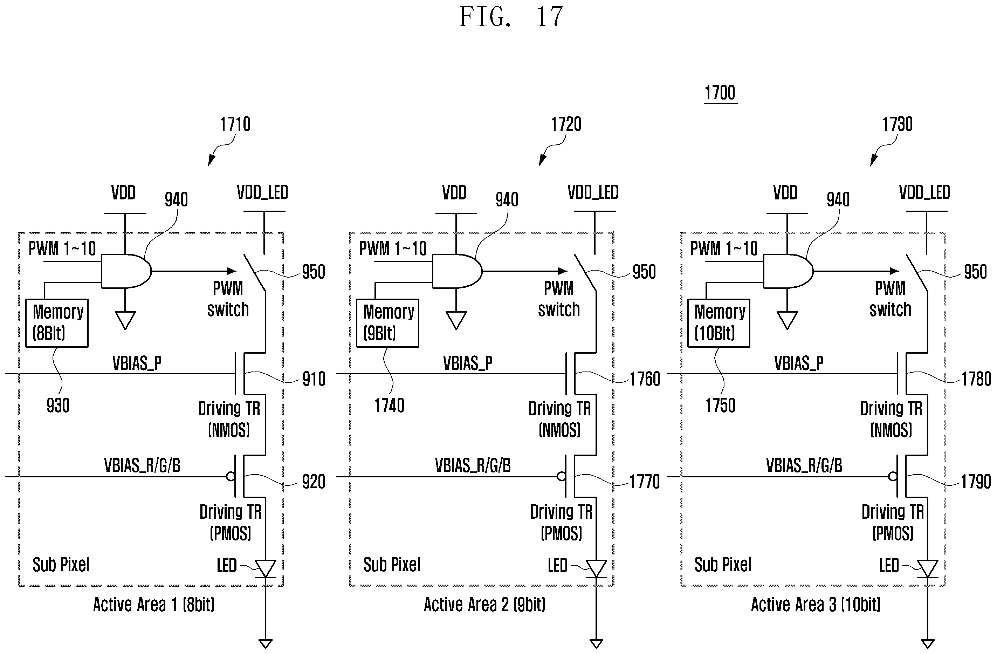

FIG. 17 is a view illustrating a display according to an embodiment of the disclosure.

Referring to FIG. 17, a display 1700 may include a center portion 1710 (e.g., first active area), a peripheral portion 1730 (e.g., third active area), and a middle portion 1720 (e.g., second active area) positioned between the center portion 1710 and the peripheral portion 1730.

In an embodiment, a first number of bits of first memory 930 included in each pixel disposed in the center portion 1710 of the display (e.g., first active area), a second number of bits of second memory 1740 included in each pixel disposed in the middle portion 1720 of the display (e.g., second active area), and a third number of bits of third memory 1750 included in each pixel disposed in the peripheral portion 1730 of the display (e.g., third active area) may be different.

For example, the first number of bits (e.g., 8 bits) of the first memory 930 included in each pixel disposed in the center portion 1710 (e.g., first active area) of the display is greater than the second number of bits (e.g., 9 bits) of the second memory 1740 included in each pixel disposed in the middle portion 1720 (e.g., second active area) of the display.

For example, the second number of bits (e.g., 9 bits) of the second memory 1740 included in each pixel disposed in the middle portion 1720 (e.g., second active area) of the display is greater than the third number of bits (e.g., 10 bits) of the third memory 1750 included in each pixel disposed in the peripheral portion 1730 (e.g., third active area) of the display.

In an embodiment, each pixel disposed in the center portion 1710 of the display (e.g., first active area) may include multiple signal wirings, multiple power wirings, an LED, the first driving transistor 910, the second driving transistor 920, the first memory 930, the PWM signal outputting unit 940, and the PWM signal switch 950. For example, the first memory 930 included in each pixel disposed in the center portion 1710 of the display (e.g., first active area) has a first number of bits (e.g., 8 bits). PWM signals having 1 to 10 pulse width types (PWM 1 to 10) may be input to the PWM signal outputting unit 940 in the center portion 1710 (e.g., first active area) of the display. In an embodiment, each pixel disposed in the middle portion 1720 (e.g., second active area) of the display may include multiple signal wirings, multiple power wirings, an LED, a first driving transistor 1760, a second driving transistor 1770, the second memory 1740, the PWM signal outputting unit 940, and the PWM signal switch 950. For example, the second memory 1740 included in each pixel disposed in the middle portion 1720 of the display (e.g., second active area) may have a second number of bits (e.g., 9 bits) greater than the first number of bits. For example, PWM signals having 1 to 10 pulse width types (PWM 1 to 10) are input to the PWM signal outputting unit 940 in the middle portion 1720 (e.g., second active area) of the display. In an embodiment, each pixel disposed in the peripheral portion 1730 (e.g., third active area) of the display may include multiple signal wirings, multiple power wirings, an LED, a first driving transistor 1780, a second driving transistor 1790, the third memory 1750, the PWM signal outputting unit 940, and the PWM signal switch 950. For example, the third memory 1750 included in each pixel disposed in the peripheral portion 1730 of the display (e.g., third active area) has a third number of bits (e.g., 10 bits) that is greater than the first number of bits and the second number of bits.

In an embodiment, the display 1700 may have a different PPI formed in the center portion 1710 (e.g., first active area) of the display, the middle portion 1720 of the display (e.g., second active area), and the peripheral portion 1730 of the display (e.g., third active area). For example, the center portion 1710 (e.g., first active area) of the display 1700 has a first number of pixels (e.g., first PPI) disposed therein. For example, a second number of pixels (e.g., second PPI) are disposed in the middle portion 1720 of the display (e.g., second active area) that is smaller than the first number. For example, a third number of pixels (e.g., third PPI) is disposed in the peripheral portion 1730 of the display (e.g., third active area) that is smaller than the second number.

For example, the second memory 1740 may be formed greater by an area corresponding to the reduced pixels in the middle portion 1720 (e.g., second active area) having a second PPI that is smaller compared to a first PPI in the center portion 1710 (e.g., first active area). The middle portion 1720 having the second PPI (e.g., second active area) may have an additional one bit secured by an area corresponding to the reduced pixels, so that the second memory 1740 may be made to total nine bits.

For example, the third memory 1750 is formed greater by an area corresponding to the reduced pixels in the peripheral portion 1730 (e.g., third active area) having a third PPI that is smaller compared to the first PPI of the center portion 1710 (e.g., first active area) and the second PPI of the middle portion 1720 (e.g., second active area). The peripheral portion 1730 having the third PPI (e.g., third active area) may have an additional two bit secured by an area corresponding to the reduced pixels, so that the third memory 1750 may be made to total ten bits.

The display 1700 according to an embodiment of the disclosure may include the center portion 1710 (e.g., first active area), the peripheral portion 1730 (e.g., third active area), and the middle portion 1720 (e.g., second active area) positioned between the center portion 1710 and the peripheral portion 1730.

In an embodiment, a first number of bits of first memory 930 included in each pixel disposed in the center portion 1710 of the display (e.g., first active area), a second number of bits of second memory 1740 included in each pixel disposed in the middle portion 1720 of the display (e.g., second active area), and a third number of bits of third memory 1750 included in each pixel disposed in the peripheral portion 1730 of the display (e.g., third active area) may be different.

As claimed, the first number of bits (e.g., 8 bits) of the first memory 930 included in each pixel disposed in the center portion 1710 (e.g., first active area) of the display is smaller than the second number of bits (e.g., 9 bits) of the second memory 1740 included in each pixel disposed in the middle portion 1720 (e.g., second active area) of the display.

As claimed, the second number of bits (e.g., 9 bits) of the second memory 1740 included in each pixel disposed in the middle portion 1720 (e.g., second active area) of the display is smaller than the third number of bits (e.g., 10 bits) of the third memory 1750 included in each pixel disposed in the peripheral portion 1730 (e.g., third active area) of the display.

In an embodiment, each pixel disposed in the center portion 1710 of the display (e.g., first active area) may include multiple signal wirings, multiple power wirings, an LED, the first driving transistor 910, the second driving transistor 920, the first memory 930, the PWM signal outputting unit 940, and the PWM signal switch 950. For example, the first memory 930 included in each pixel disposed in the center portion 1710 of the display (e.g., first active area) has a first number of bits (e.g., 8 bits). For example, the first driving transistor 910 and the second driving transistor 920 disposed in the center portion 1710 of the display (e.g., first active area) is formed in a first size.

In an embodiment, the first memory 930 disposed in the center portion 1710 of the display (e.g., first active area) may be made to total 8 bits. The first memory 930 disposed in the center portion 1710 of the display (e.g., first active area) has a first number of bits (e.g., 8 bits), so that the emission time of the LEDs may be adjusted using eight PWM signals selectively among ten PWM signals input to the PWM signal outputting unit 940.

In an embodiment, each pixel disposed in the middle portion 1720 of the display (e.g., second active area) may include multiple signal wirings, multiple power wirings, an LED, the first driving transistor 1760, the second driving transistor 1770, the second memory 1740, the PWM signal outputting unit 940, and the PWM signal switch 950. For example, the second memory 1740 included in each pixel disposed in the middle portion 1720 of the display (e.g., second active area) has a second number of bits (e.g., 9 bits) greater than the first number of bits. For example, the first driving transistor 1760 and the second driving transistor 1770 disposed in the middle portion 1720 (e.g., second active area) of the display is formed in a second size that is smaller than the first size of the first driving transistor 910 and the second driving transistor 920 disposed in the center portion 1710 (e.g., first active area) of the display. For example, the second memory 1740 is formed greater by an area in which the size (e.g., second size) of the first driving transistor 1760 and the second driving transistor 1770 disposed in the middle portion 1720 of the display (e.g., second active area) is reduced. One bit may be additionally secured by an area in which the size of the first driving transistor 1760 and the second driving transistor 1770 disposed in the middle portion 1720 of the display (e.g., second active area) is reduced (e.g., second size) so that the second memory 1740 may be made to total nine bits.

In an embodiment, the second memory 1740 disposed in the middle portion 1720 of the display (e.g., second active area) has a second number of bits (e.g., 9 bits), so that the emission time of the LEDs may be adjusted using nine PWM signals selectively among ten PWM signals input to the PWM signal outputting unit 940. The LED of each pixel disposed in the middle portion 1720 of the display (e.g., second active area) may compensate for the luminance by adjusting the gradation to 9 bits.

In an embodiment, each pixel disposed in the peripheral portion 1730 of the display (e.g., third active area) may include multiple signal wirings, multiple power wirings, an LED, the first driving transistor 1780, the second driving transistor 1790, the third memory 1750, the PWM signal outputting unit 940, and the PWM signal switch 950. For example, the third memory 1750 included in each pixel disposed in the peripheral portion 1730 of the display (e.g., third active area) has a third number of bits (e.g., 10 bits) that is greater than the first number of bits and the second number of bits. For example, the first driving transistor 1780 and the second driving transistor 1790 disposed in the peripheral portion 1730 (e.g., third active area) of the display are formed in the third size that is smaller than the second size of the first driving transistor 1760 and the second driving transistor 1770 disposed in the middle portion 1720 (e.g., second active area) of the display.

For example, the third memory 1750 is formed greater by an area in which the size (e.g., third size) of the first driving transistor 1780 and the second driving transistor 1790 disposed in the peripheral portion 1730 of the display (e.g., third active area) is reduced. Two bits may be additionally secured by an area in which the size of the first driving transistor 1780 and the second driving transistor 1790 disposed in the peripheral portion 1730 of the display (e.g., third active area) is reduced (e.g., third size) so that the third memory 1750 may be made to total ten bits.

In an embodiment, the third memory 1750 disposed in the peripheral portion 1730 of the display (e.g., third active area) has a third number of bits (e.g., 10 bits), which may adjust the emission time of the LEDs selectively using ten PWM signals input to the PWM signal outputting unit 940. The LED of each pixel disposed in the peripheral portion 1730 of the display (e.g., third active area) may compensate for the luminance by adjusting the gradation to 10 bits.

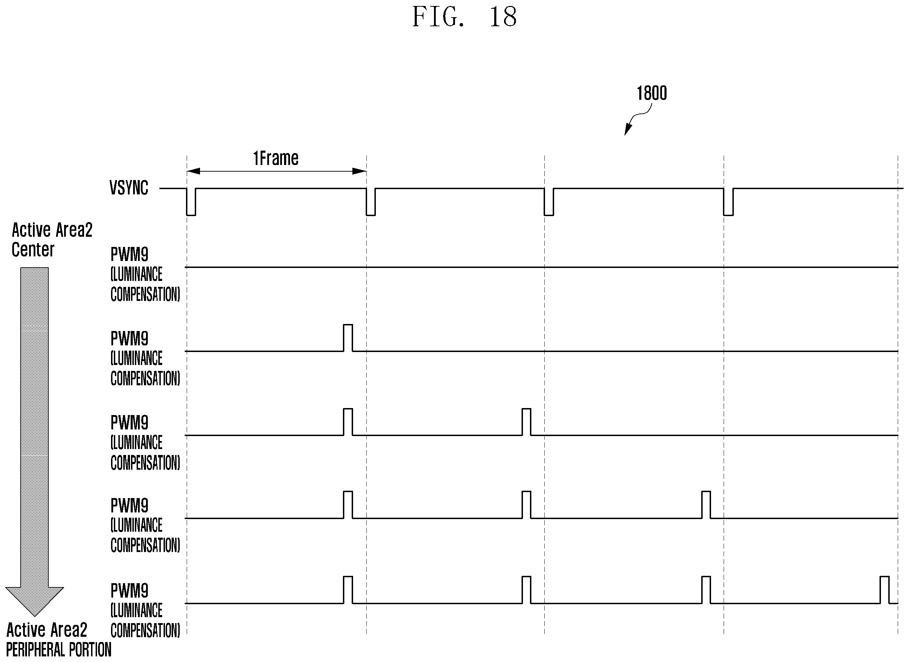

FIG. 18 is a view illustrating driving signals for driving pixels disposed in a center portion of a display according to an embodiment of the disclosure.

Referring to FIGS. 17 and 18, in a view 1800, the center portion 1710 (e.g., first active area) of the display may express a gradation with eight bits, the middle portion 1720 (e.g., second active area) may express a gradation with nine bits, and the peripheral portion 1730 (e.g., third active area) may express a gradation with ten bits to compensate for the luminance.

In an embodiment, when the middle portion 1720 of the display (e.g., second active area) expresses a gradation with nine bits, a ninth PWM signal (PWM9) may be added. The processor (e.g., processor 120 in FIG. 1) may control a DDI (e.g., DDI 320 in FIG. 3) to set a number of times of light-emission according to the added ninth PWM signal (PWM9) differently in a unit of a frame.

In an embodiment, a ninth PWM signal (PWM9) and a tenth PWM signal (PWM10) may be added when the gradation is expressed in 10 bits in the peripheral portion 1730 of the display (e.g., third active area). The processor (e.g., processor 120 in FIG. 1) may control a DDI (e.g., DDI 320 in FIG. 3) to set a number of times of light-emission according to the added ninth PWM signal (PWM9) and tenth PWM signal (PWM 10) differently in a unit of a frame. The first memory 930 disposed in the center portion 1710 (e.g., first active area) of the display may be formed with a first number of bits (e.g., 8 bits), the second memory 1740 disposed in the middle portion 1720 (e.g., second active area) of the display may be formed with a second number of bits (e.g., 9 bits), and the third memory 1750 disposed in the peripheral portion 1730 (e.g., third active area) of the display may be formed with a third number of bits (e.g., 10 bits).

The electronic device (e.g., electronic device 101 in FIG. 1 and electronic device 200 in FIG. 2), according to an embodiment of the disclosure, may compensate for the emission luminance of LEDs with added bits of memory and added PWM signals to uniformize the luminance of an entire area of the display (e.g., entire area 1640 of the display) (e.g., a full screen).

In an embodiment, the pulses of PWM signals added to compensate for luminance in the middle portion 1720 (e.g., second active area) of the display compared to the center portion 1710 (e.g., first active area) of the display may vary the number of emissions of the LEDs in a unit of a frame. For example, the number of emissions of LEDs of pixels according to PWM signals (e.g., PWM 1 to 9) in the middle portion 1720 of the display (e.g., second active area) varies so that the luminance compensation in the middle portion 1720 of the display (e.g., second active area) is achieved naturally. For example, a portion of the middle portion 1720 (e.g., second active area) of the display that is adjacent to the center portion 1710 (e.g., first active area) of the display is configured such that LEDs of pixels according to the PWM signals (e.g., PWM 9) emits light in a first number so that the luminance difference with the center portion 1710 (e.g., first active area) of the display is not significant. A portion of the middle portion 1720 (e.g., second active area) of the display that is not adjacent to the center portion 1710 (e.g., first active area) of the display may be configured such that LEDs of pixels according to the PWM signals (e.g., PWM 1 to 9) emits light in a second number that is greater than the first number.

In an embodiment, the pulses of PWM signals added to compensate for luminance in the peripheral portion 1730 (e.g., third active area) of the display compared to the center portion 1710 (e.g., first active area) of the display may vary the number of emissions of the LEDs in a unit of a frame. For example, the number of emissions of LEDs of pixels according to PWM signals (e.g., PWM 1 to 10) in the peripheral portion 1730 of the display (e.g., third active area) varies so that the luminance compensation in the peripheral portion 1730 of the display (e.g., third active area) is achieved naturally. For example, a portion of the peripheral portion 1730 (e.g., third active area) of the display that is adjacent to the middle portion 1720 (e.g., second active area) of the display is configured such that LEDs of pixels according to the PWM signals (e.g., PWM 9) emits light in a third number so that the luminance difference with the middle portion 1720 (e.g., second active area) of the display is not significant. A portion of the peripheral portion 1730 (e.g., third active area) of the display that is not adjacent to the middle portion 1720 (e.g., second active area) of the display may be configured such that LEDs of pixels according to the PWM signals (e.g., PWM 1 to 10) emits light in a fourth number that is greater than the third number.

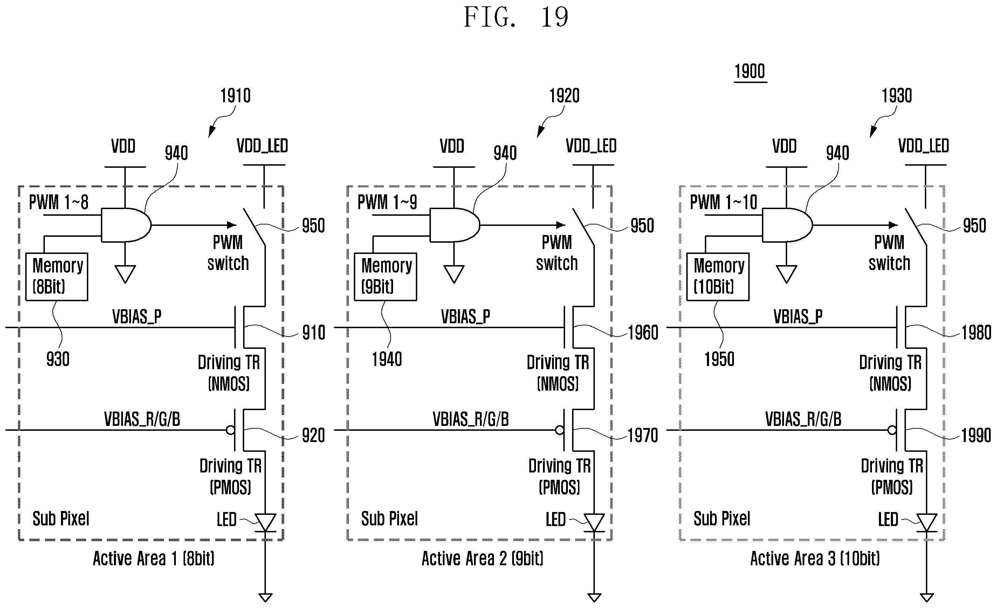

FIG. 19 is a view illustrating a display according to an embodiment of the disclosure.

Referring to FIG. 19, a display 1900 may include a center portion 1910 (e.g., first active area), a peripheral portion 1930 (e.g., third active area), and a middle portion 1920 (e.g., second active area) positioned between the center portion 1910 and the peripheral portion 1930.

In an embodiment, a first number of bits of first memory 930 included in each pixel disposed in the center portion 1910 of the display (e.g., first active area), a second number of bits of second memory 1940 included in each pixel disposed in the middle portion 1920 of the display (e.g., second active area), and a third number of bits of third memory 1950 included in each pixel disposed in the peripheral portion 1930 of the display (e.g., third active area) may be different.

As claimed, the first number of bits (e.g., 8 bits) of the first memory 930 included in each pixel disposed in the center portion 1910 (e.g., first active area) of the display is smaller than the second number of bits (e.g., 9 bits) of the second memory 1940 included in each pixel disposed in the middle portion 1920 (e.g., second active area) of the display.

As claimed, the second number of bits (e.g., 9 bits) of the second memory 1940 included in each pixel disposed in the middle portion 1920 (e.g., second active area) of the display is smaller than the third number of bits (e.g., 10 bits) of the third memory 1950 included in each pixel disposed in the peripheral portion 1930 (e.g., third active area) of the display.

In an embodiment, each pixel disposed in the center portion 1910 of the display (e.g., first active area) may include multiple signal wirings, multiple power wirings, an LED, the first driving transistor 910, the second driving transistor 920, the first memory 930, the PWM signal outputting unit 940, and the PWM signal switch 950. For example, the first memory 930 included in each pixel disposed in the center portion 1910 of the display (e.g., first active area) has a first number of bits (e.g., 8 bits).

In an embodiment, each pixel disposed in the middle portion 1920 of the display (e.g., second active area) may include multiple signal wirings, multiple power wirings, an LED, the first driving transistor 1960, the second driving transistor 1970, the second memory 1940, the PWM signal outputting unit 940, and the PWM signal switch 950. For example, the second memory 1940 included in each pixel disposed in the middle portion 1920 of the display (e.g., second active area) has a second number of bits (e.g., 9 bits) greater than the first number of bits. For example, the number of bits (e.g., 9 bits) of the second memory 1940 disposed at each pixel of the middle portion 1920 (e.g., second active area) of the display may be increased by an area secured by reducing the PPI of the middle portion 1920 (e.g., second active area), or by reducing the size of the first driving transistor 1960 and the second driving transistor 1970.

In an embodiment, each pixel disposed in the peripheral portion 1930 of the display (e.g., third active area) may include multiple signal wirings, multiple power wirings, an LED, the first driving transistor 1980, the second driving transistor 1990, the third memory 1950, the PWM signal outputting unit 940, and the PWM signal switch 950. For example, the third memory 1950 included in each pixel disposed in the peripheral portion 1930 of the display (e.g., third active area) has a third number of bits (e.g., 10 bits) that is greater than the first number of bits and the second number of bits. For example, the number of bits (e.g., 10 bits) of the third memory 1950 disposed at each pixel of the peripheral portion 1930 (e.g., third active area) of the display is increased by an area secured by reducing the PPI of the peripheral portion 1930 (e.g., third active area), or by reducing the size of the first driving transistor 1980 and the second driving transistor 1990.

In an embodiment, the number of bits for the first memory 930, the second memory 1940, and the third memory 1950 may be formed differently. The processor (e.g., processor 120 in FIG. 1) may control the DDI (e.g., DDI 320 in FIG. 3) to set different numbers of pulses of PWM signals input to the PWM signal outputting units 940 disposed in the center portion 1910 (e.g., first active area), the middle portion 1920 (e.g., second active area), and the peripheral portion 1390 (e.g., third active area).

For example, the PWM signal outputting units 940 disposed at each pixel of the center portion 1910 (e.g., first active area) are input with first to eighth PWM signals (PWM1 to PWM8), the PWM signal outputting units 940 disposed at each pixel of the middle portion 1920 (e.g., second active area) is input with first to ninth PWM signals (PWM1 to PWM9), and the PWM signal outputting units 940 disposed at each pixel of the peripheral portion 1930 (e.g., third active area) may be input with first to tenth PWM signals (PWM1 to PWM10).

In an embodiment, the center portion 1910 (e.g., first active area) of the display may express a gradation with eight bits, the middle portion 1920 (e.g., second active area) may express a gradation with nine bits, and the peripheral portion 1930 (e.g., third active area) may express a gradation with ten bits to compensate for the luminance.

In an embodiment, when the middle portion 1920 of the display (e.g., second active area) expresses a gradation with nine bits, a ninth PWM signal (PWM9) may be added. The luminance may be compensated by increasing the number of times the LED emits light according to the added ninth PWM signal (PWM9).

In an embodiment, a ninth PWM signal (PWM9) and a tenth PWM signal (PWM10) may be added when the gradation is expressed in 10 bits in the peripheral portion 1930 of the display (e.g., third active area). The luminance may be compensated by increasing the number of times the LED emits light according to the added ninth PWM signal (PWM9) and tenth PWM signal (PWM 10).

The electronic device (e.g., electronic device 101 in FIG. 1 and electronic device 200 in FIG. 2), according to an embodiment of the disclosure, may form the first memory 930 disposed in the center portion 1910 (e.g., first active area) of the display with a first number of bits (e.g., 8 bits), form the second memory 1940 disposed in the middle portion 1920 (e.g., second active area) of the display with a second number of bits (e.g., 9 bits), and form the third memory 1950 disposed in the peripheral portion 1930 of the display (e.g., third active area) with a third number of bits (e.g., 10 bits), so that the luminance of an entire area (e.g., entire area 1640 of the display in FIG. 16) (e.g., a full screen) of the display may be uniform by compensating for the emission luminance of the LEDs with added bits of memory and added PWM signals.

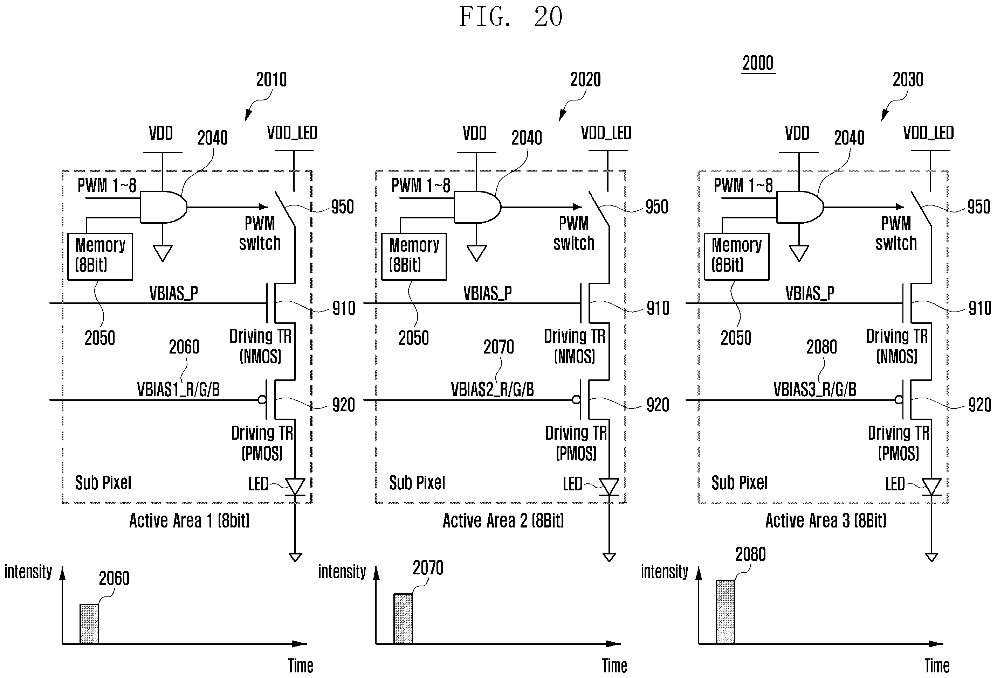

FIG. 20 is a view illustrating a display and method of operating the same according to an embodiment of the disclosure.

Referring to FIG. 20, a display 2000 may include a center portion 2010 (e.g., first active area), a peripheral portion 2030 (e.g., third active area), and a middle portion 2020 (e.g., second active area) positioned between the center portion 2010 and the peripheral portion 2030.

In an embodiment, each pixel disposed in the center portion 2010 of the display (e.g., first active area) may include multiple signal wirings, multiple power wirings, an LED, the first driving transistor 910, the second driving transistor 920, memory 2050, a PWM signal outputting unit 2040, and the PWM signal switch 950. For example, the memory 2050 included in each pixel disposed in the center portion 2010 of the display (e.g., first active area) has a first number of bits (e.g., 8 bits).

In an embodiment, each pixel disposed in the middle portion 2020 of the display (e.g., second active area) may include multiple signal wirings, multiple power wirings, an LED, the first driving transistor 910, the second driving transistor 920, the memory 2050, the PWM signal outputting unit 2040, and the PWM signal switch 950. For example, the memory 2050 included in each pixel disposed in the middle portion 2020 of the display (e.g., second active area) has a first number of bits (e.g., 8 bits).

In an embodiment, each pixel disposed in the peripheral portion 2030 of the display (e.g., third active area) may include multiple signal wirings, multiple power wirings, an LED, the first driving transistor 910, the second driving transistor 920, the memory 2050, the PWM signal outputting unit 2040, and the PWM signal switch 950. For example, the memory 2050 included in each pixel disposed in the peripheral portion 2030 of the display (e.g., third active area) has a first number of bits (e.g., 8 bits).

In an embodiment, the processor (e.g., processor 120 in FIG. 1) may control the DDI (e.g., DDI 320 in FIG. 3) to set differently magnitude of a first bias voltage 2060 (VBIAS1_R/G/B) supplied to the second driving transistor 920 disposed in the center portion 2010 (e.g., first active area) of the display, a second bias voltage 2070 (VBIAS2_R/G/B) supplied to the second driving transistor 920 disposed in the middle portion 2020 (e.g., second active area) of the display, and a third bias voltage 2080 (VBIAS3_R/G/B) supplied to the second driving transistor 920 disposed in the peripheral portion 2030 (e.g., third active area) of the display.

For example, the processor (e.g., processor 120 in FIG. 1) controls the DDI (e.g., DDI 320 in FIG. 3) to allow the second driving transistor 920 included in each pixel disposed in the center portion 2010 of the display (e.g., first active area) to be supplied with the first bias voltage 2060 (VBIAS1_R/G/B) of a first value.

For example, the processor (e.g., processor 120 in FIG. 1) controls the DDI (e.g., DDI 320 in FIG. 3) to allow the second driving transistor 920 included in each pixel disposed in the middle portion 2020 of the display (e.g., second active area) to be supplied with the second bias voltage 2070 (VBIAS2_R/G/B) of a second value greater than the first value.

For example, the processor (e.g., processor 120 in FIG. 1) controls the DDI (e.g., DDI 320 in FIG. 3) to allow the second driving transistor 920 included in each pixel disposed in the peripheral portion 2030 of the display (e.g., third active area) to be supplied with the third bias voltage 2080 (VBIAS3_R/G/B) of a third value greater than the first and second values.

The electronic device (e.g., electronic device 101 in FIG. 1 and electronic device 200 in FIG. 2), according to an embodiment of the disclosure, may vary the magnitude of the bias voltages 2060, 2070, and 2080 supplied to the second driving transistors 920 disposed in the center portion 2010 (e.g., first active area), the middle portion 2020 (e.g., second active area), and the peripheral portion 2030 (e.g., third active area) of the display to compensate for the emission luminance of the LEDs, so that the luminance of an entire area of the display (e.g., entire area 1640 of the display in FIG. 16) (e.g., a full screen) may be uniform.

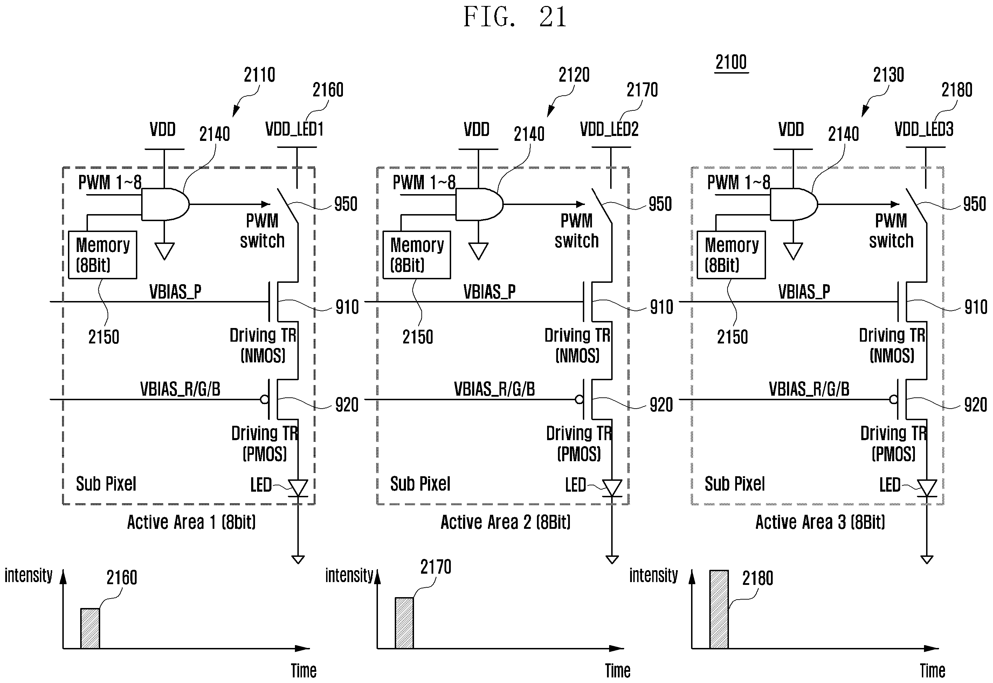

FIG. 21 is a view illustrating a display and method of operating the same according to an embodiment of the disclosure.

Referring to FIG. 21, a display 2100 may include a center portion 2110 (e.g., first active area), a peripheral portion 2130 (e.g., third active area), and a middle portion 2120 (e.g., second active area) positioned between the center portion 2110 and the peripheral portion 2130.

In an embodiment, each pixel disposed in the center portion 2110 of the display (e.g., first active area) may include multiple signal wirings, multiple power wirings, an LED, the first driving transistor 910, the second driving transistor 920, memory 2150, a PWM signal outputting unit 2140, and the PWM signal switch 950. For example, the memory 2150 included in each pixel disposed in the center portion 2110 of the display (e.g., first active area) has a first number of bits (e.g., 8 bits).

In an embodiment, each pixel disposed in the middle portion 2120 of the display (e.g., second active area) may include multiple signal wirings, multiple power wirings, an LED, the first driving transistor 910, the second driving transistor 920, the memory 2150, the PWM signal outputting unit 2140, and the PWM signal switch 950. For example, the memory 2150 included in each pixel disposed in the middle portion 2120 of the display (e.g., second active area) has a first number of bits (e.g., 8 bits).

In an embodiment, each pixel disposed in the peripheral portion 2130 of the display (e.g., third active area) may include multiple signal wirings, multiple power wirings, an LED, the first driving transistor 910, the second driving transistor 920, the memory 2150, the PWM signal outputting unit 2140, and the PWM signal switch 950. For example, the memory 2150 included in each pixel disposed in the peripheral portion 2130 of the display (e.g., third active area) has a first number of bits (e.g., 8 bits).

In an embodiment, the processor (e.g., processor 120 in FIG. 1) may control the DDI (e.g., DDI 320 in FIG. 3) to differently set values of an LED VDD voltage (VDD_LED) supplied to the PWM signal switches 950 disposed in the center portion 2110 (e.g., first active area) of the display, the middle portion 2120 (e.g., second active area) of the display, and the peripheral portion 2130 (e.g., third active area) of the display.

For example, the processor (e.g., processor 120 in FIG. 1) controls the DDI (e.g., DDI 320 in FIG. 3) to allow the PWM signal switch 950 disposed at each pixel of the center portion 2110 (e.g., first active area) of the display to be supplied with a first LED VDD voltage 2160 (VDD_LED1) of a first value.

For example, the processor (e.g., processor 120 in FIG. 1) controls the DDI (e.g., DDI 320 in FIG. 3) to allow the PWM signal switch 950 disposed at each pixel in the middle portion 2120 (e.g., second active area) of the display to be supplied with a second LED VDD voltage 2170 (VDD_LED2) of a second value greater than the first value.

For example, the processor (e.g., processor 120 in FIG. 1) controls the DDI (e.g., DDI 320 in FIG. 3) to allow the PWM signal switch 950 disposed at each pixel of the peripheral portion 2130 of the display (e.g., second active area) to be supplied with a third LED VDD voltage 2180 (VDD_LED3) of a third value greater than the first and second values.

The electronic device (e.g., electronic device 101 in FIG. 1 and electronic device 200 in FIG. 2), according to an embodiment of the disclosure, may vary the magnitude of the LED VDD voltages 2160, 2170, and 2180 supplied to the PWM signal switch 950 disposed in the center portion 2110 (e.g., first active area), the middle portion 2120 (e.g., second active area), and the peripheral portion 2130 (e.g., third active area) of the display to compensate for the emission luminance of the LEDs, so that the luminance of an entire area of the display (e.g., entire area 1640 of the display in FIG. 16) (e.g., a full screen) may be uniform.

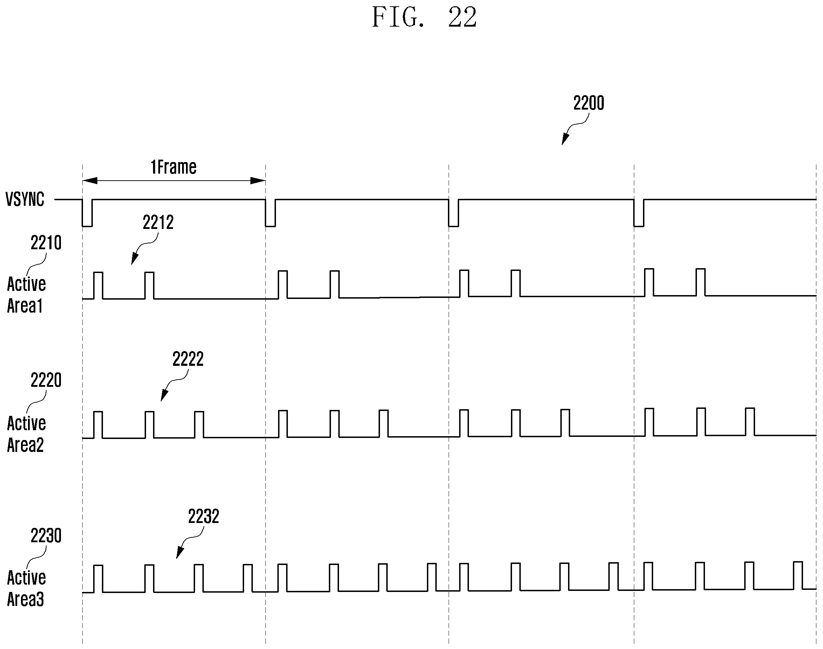

FIG. 22 is a view 2200 illustrating a method of operating an electronic device including a display according to an embodiment of the disclosure.

Referring to FIG. 22, the electronic device (e.g., electronic device 101 in FIG. 1 and electronic device 200 in FIG. 2) including the display (e.g., display 900 in FIG. 9, display 1100 in FIGS. 11 and 12, display 1700 in FIG. 17, display 1900 in FIG. 19, display 2000 in FIG. 20, and display 2100 in FIG. 21), according to an embodiment of the disclosure, may differently set a number of duties of PWM signals supplied to each pixel disposed in a center portion 2210 (e.g., first active area), a middle portion 2220 (e.g., second active area), and a peripheral portion 2230 (e.g., third active area) of the display 900, 1100, 1700, 1900, 2000, or 2100.

For example, the processor (e.g., processor 120 in FIG. 1) controls the DDI (e.g., DDI 320 in FIG. 3) to set first PWM signals 2212 supplied to each pixel disposed in the center portion 2210 of the display (e.g., first active area) to have a first number of duties.

For example, the processor (e.g., processor 120 in FIG. 1) controls the DDI (e.g., DDI 320 in FIG. 3) to set second PWM signals 2222 supplied to each pixel disposed in the middle portion 2220 of the display (e.g., second active area) to have a second number of duties greater than the first number of duties.

For example, the processor (e.g., processor 120 in FIG. 1) controls the DDI (e.g., DDI 320 in FIG. 3) to set third PWM signals 2232 supplied to each pixel disposed in the peripheral portion 2230 of the display (e.g., third active area) to have a third number of duties that is greater than the first number of duties and the second number of duties.

For example, the processor (e.g., processor 120 in FIG. 1) controls the DDI (e.g., DDI 320 in FIG. 3) to equalize the pulse widths of the first PWM signals 2212, the second PWM signals 2222, and the third PWM signals 2232.

The electronic device (e.g., electronic device 101 in FIG. 1 and electronic device 200 in FIG. 2), according to an embodiment of the disclosure, may vary the number of duties of the PWM voltages 2212, 2222, and 2232 supplied to each pixel disposed in the center portion 2210 (e.g., first active area), the middle portion 2220 (e.g., second active area), and the peripheral portion 2230 (e.g., third active area) of the display to compensate for the emission luminance of the LEDs, so that the luminance of an entire area of the display (e.g., entire area 1640 of the display in FIG. 16) (e.g., a full screen) may be uniform.

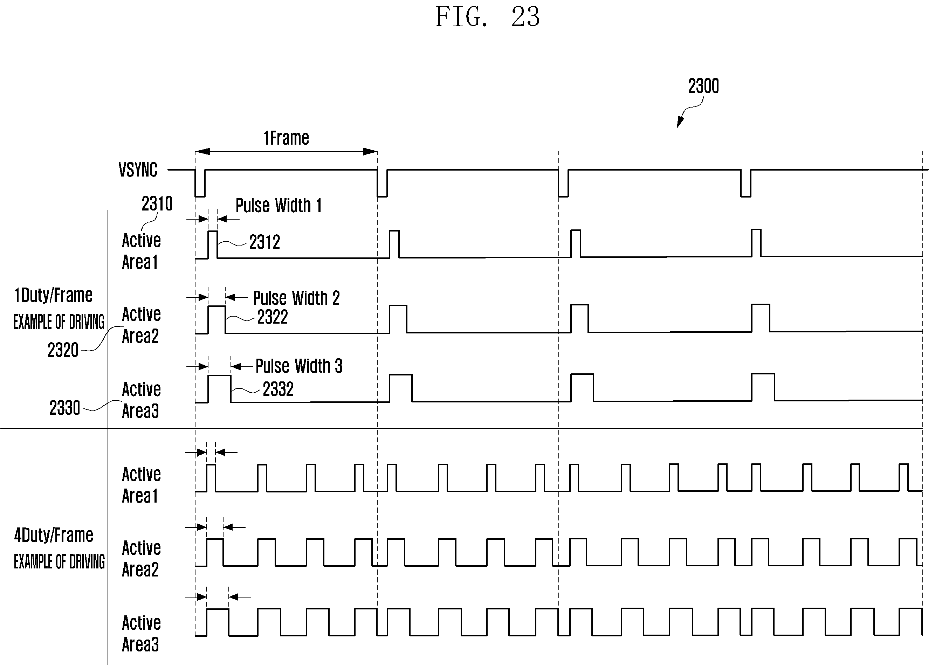

FIG. 23 is a view illustrating a method of operating an electronic device including a display according to an embodiment of the disclosure.

Referring to FIG. 23, in a view 2300, the electronic device (e.g., electronic device 101 in FIG. 1 and electronic device 200 in FIG. 2) including the display (e.g., display 900 in FIG. 9, display 1100 in FIGS. 11 and 12, display 1700 in FIG. 17, display 1900 in FIG. 19, display 2000 in FIG. 20, and display 2100 in FIG. 21), according to an embodiment of the disclosure, may differently set the pulse widths of PWM signals supplied to each pixel disposed in a center portion 2310 (e.g., first active area), a middle portion 2320 (e.g., second active area), and a peripheral portion 2330 (e.g., third active area) of the display 900, 1100, 1700, 1900, 2000, or 2100.

For example, the processor (e.g., processor 120 in FIG. 1) controls the DDI (e.g., DDI 320 in FIG. 3) to set first PWM signals 2312 supplied to each pixel disposed in the center portion 2310 of the display (e.g., first active area) to have a first pulse width (pulse width 1).

For example, the processor (e.g., processor 120 in FIG. 1) controls the DDI (e.g., DDI 320 in FIG. 3) to set second PWM signals 2322 supplied to each pixel disposed in the middle portion 2320 of the display (e.g., second active area) to have a second pulse width (pulse width 2) greater than the first pulse width.

For example, the processor (e.g., processor 120 in FIG. 1) controls the DDI (e.g., DDI 320 in FIG. 3) to set third PWM signals 2332 supplied to each pixel disposed in the peripheral portion 2330 of the display (e.g., third active area) to have a third pulse width that is greater than the first pulse width and the second pulse width.

For example, the processor (e.g., processor 120 in FIG. 1) may control the DDI (e.g., DDI 320 in FIG. 3) to equalize the number of pulses of the first PWM signals 2312, the second PWM signals 2322, and the third PWM signals 2332.

The electronic device (e.g., electronic device 101 in FIG. 1 and electronic device 200 in FIG. 2), according to an embodiment of the disclosure, may vary the pulse widths (pulse width 1, pulse width 2, and pulse width 3) of the PWM voltages 2312, 2322, and 2332 supplied to each pixel disposed in the center portion 2310 (e.g., first active area), the middle portion 2320 (e.g., second active area), and the peripheral portion 2330 (e.g., third active area) of the display to compensate for the emission luminance of the LEDs, so that the luminance of an entire area of the display (e.g., entire area 1640 of the display in FIG. 16) (e.g., a full screen) may be uniform.

The following examples present non-claimed embodiments. An electronic device (e.g., electronic device 101 in FIG. 1 and electronic device 200 in FIG. 2), according to an embodiment of the disclosure, may include a display portion (e.g., display portion 220 in FIG. 2) including a display (e.g., display 900 in FIG. 9, display 1100 in FIGS. 11 and 12, display 1700 in FIG. 17, display 1900 in FIG. 19, display 2000 in FIG. 20, and display 2100 in FIG. 21) in which multiple pixels (e.g., pixels P in FIG. 3) are disposed, a display driving circuit portion (e.g., display driving circuit portion 320 in FIG. 3) that drives the display 900, 1100, 1700, 1900, 2000, or 2100, a processor (e.g., processor 120 in FIG. 1) operatively connected to the display driving circuit portion 320, and memory (e.g., memory 130 in FIG. 1) operatively connected to the processor 120. The display 900, 1100, 1700, 1900, 2000, or 2100 may include a center portion 1110, 1710, 1910, 2010 or 2110, a peripheral portion 1130, 1730, 1930, 2030, or 2130 spaced apart from the center portion 1110, 1710, 1910, 2010, or 2110, and a middle portion 1120, 1720, 1920, 2020, or 2120 positioned between the center portion 1110, 1710, 1910, 2010, or 2110 and the peripheral portions 1130, 1730, 1930, 2030, or 2130. The center portion 1110, 1710, 1910, 2010, or 2110, the middle portion 1120, 1720, 1920, 2020, or 2120, and the peripheral portion 1130, 1730, 1930, 2030, or 2130 may include a pixel driving circuit for driving a light-emitting element (e.g., micro LED, OLED) disposed in the multiple pixels P. The pixel driving circuits may include at least one driving transistor 910 and 920 that supplies a voltage for driving the light-emitting element (e.g., micro LED, OLED) to the light-emitting element (e.g., micro LED, OLED), memory 1230, 1240, or 1250 in which gradation data is stored, a PWM signal outputting unit 940 that outputs one of multiple pulse width modulation (PWM) signals according to the gradation data stored in the memory 1230, 1240, or 1250, and a PWM signal switch 950 that is turned on or off by the PWM signal to control an output of the voltage for driving the light-emitting element (e.g., micro LED, OLED). The bits of first memory 1230 disposed at a first pixel included in the center portion 1110, 1710, 1910, 2010, or 2110, second memory 1240 disposed at a second pixel included in the middle portion 1120, 1720, 1920, 2020, or 2120, and third memory 1250 disposed at a second pixel included in the peripheral portion 1130, 1730, 1930, 2030, or 2130 may be formed differently.

An electronic device and a method of operating the same, according to an embodiment of the disclosure, can improve display quality by displaying substantially the same luminance on the center portion of the screen and the peripheral portion of the screen (or reducing luminance deviation).

According to an embodiment, the first memory 1230 may include a first bit of storage space, and the second memory 1240 may include a second bit of memory area greater than the first bit.

According to an embodiment, the third memory 1250 may include a third bit of memory area that is greater than the first bit and the second bit.

According to an embodiment, first pixel driving circuits disposed in the center portion 1110, 1710, 1910, 2010, or 2110 may include multiple driving transistors 910 and 920. Second pixel driving circuits disposed in the middle portion 1120, 1720, 1920, 2020, or 2120 of the pixel driving circuits may include a single driving transistor 920.

According to an embodiment, a second area for disposition of the single driving transistor 920 formed in the middle portion 1120, 1720, 1920, 2020, or 2120 may be reduced compared to a first area for disposition of multiple driving transistors 910 and 920 formed in the center portion 1110, 1710, 1910, 2010, or 2110 so that a first free area is secured, and a size of the second memory 1240 may increase by the first free area.

According to an embodiment, third pixel driving circuits disposed in the peripheral portion 1130, 1730, 1930, 2030, or 2130 of the pixel driving circuits may include a single driving transistors 920.

According to an embodiment, a third area for disposition of the single driving transistor 910 or 920 formed in the peripheral portion 1130, 1730, 1930, 2030, or 2130 may be reduced compared to the first area for disposition of the multiple driving transistors 910 and 920 formed in the center portion 1110, 1710, 1910, 2010, or 2110 so that a second free area is secured, and a size of the third memory 1250 may increase by the second free area.

According to an embodiment, the first memory 1230 may include a memory area of 8 bits, the second memory 1240 may include a memory area of 9 bits, and the third memory 1250 may include a memory area of 10 bits.

According to an embodiment, a first light-emitting element (e.g., micro LED, OLED) disposed in the center portion 1110, 1710, 1910, 2010, or 2110 may emit light in a gradation of steps 0 to 255, a second light-emitting element (e.g., micro LED, OLED) disposed in the middle portion 1120, 1720, 1920, 2020, or 2120 may emit light in a gradation of 0 to 511 steps, and a third light-emitting element (e.g., micro LED, OLED) disposed in the peripheral portion 1130, 1730, 1930, 2030, or 2130 may emit light in a gradation of steps 0 to 1023.

According to an embodiment, the display portion 220 may include an optical barrier that guides paths of light emitted from the light-emitting element (e.g., micro-LED, OLED) and light incident from an outside, combiner optics that combine and output light emitted from the light-emitting element (e.g., micro-LED, OLED) and light incident from the outside, and a lens that guides light emitted from the light-emitting element (e.g., micro-LED, OLED) to the combiner optics.

An electronic device 101 or 200, according to an embodiment of the disclosure, may include a display portion 220 including a display 900, 1100, 1700, 1900, 2000, or 2100 in which multiple pixels P are disposed, a display driving circuit portion 320 that drives the display 900, 1100, 1700, 1900, 2000, or 2100, a processor 120 operatively connected to the display driving circuit portion 320, and memory operatively connected to the processor 120. The display 900, 1100, 1700, 1900, 2000, or 2100 may include a center portion 1110, 1710, 1910, 2010 or 2110, a peripheral portion 1130, 1730, 1930, 2030, or 2130 spaced apart from the center portion 1110, 1710, 1910, 2010, or 2110, and a middle portion 1120, 1720, 1920, 2020, or 2120 positioned between the center portion 1110, 1710, 1910, 2010, or 2110 and the peripheral portions 1130, 1730, 1930, 2030, or 2130. The center portion 1110, 1710, 1910, 2010, or 2110, the middle portion 1120, 1720, 1920, 2020, or 2120, and the peripheral portion 1130, 1730, 1930, 2030, or 2130 may include a pixel driving circuit for driving a light-emitting element (e.g., micro LED, OLED) disposed in the multiple pixels P. The pixel driving circuits may include multiple driving transistor 910 and 920 that supplies a voltage for driving the light-emitting element (e.g., micro LED, OLED) to the light-emitting element (e.g., micro LED, OLED), memory 930, 1740, or 1750 in which gradation data is stored, a PWM signal outputting unit 940 that outputs one of multiple pulse width modulation (PWM) signals according to the gradation data stored in the memory 930, 1740, or 1750, and a PWM signal switch 950 that is turned on or off by the PWM signal to control an output of the voltage for driving the light-emitting element (e.g., micro LED, OLED). The bits of first memory 930 disposed at a first pixel included in the center portion 1110, 1710, 1910, 2010, or 2110, second memory 1740 disposed at a second pixel included in the middle portion 1120, 1720, 1920, 2020, or 2120, and third memory 1750 disposed at a second pixel included in the peripheral portion 1130, 1730, 1930, 2030, or 2130 may be formed differently.

According to an embodiment, the first memory 930 may include a first bit of storage space, and the second memory 1740 may include a second bit of memory area greater than the first bit.

According to an embodiment, the third memory 1750 may include a third bit of memory area that is greater than the first bit and the second bit.

According to an embodiment, the center portion 1110, 1710, 1910, 2010, or 2110 may include first pixels of a first pixel per inch (PPI). The middle portion 1120, 1720, 1920, 2020, or 2120 may include second pixels of a second PPI that is smaller than the first PPI. The peripheral portion 1130, 1730, 1930, 2030, or 2130 may include third pixels of a third PP that are smaller than the second PPI.

According to an embodiment, a second area for disposition of the second pixels included in the middle portion 1120, 1720, 1920, 2020, or 2120 may be reduced compared to a first area for disposition of the first pixels included in the center portion 1110, 1710, 1910, 2010, or 2110 so that a first free area is secured, and a size of the second memory 1740 may increase by the first free area.

According to an embodiment, a third area for disposition of the third pixels included in the peripheral portion 1130, 1730, 1930, 2030, or 2130 may be reduced compared to the first area for disposition of the first pixels included in the center portion 1110, 1710, 1910, 2010, or 2110, so that a second free area is secured, and a size of the third memory 1750 may increase by the second free area.

According to an embodiment, the multiple driving transistors 910 and 920 formed in the center portion 1110, 1710, 1910, 2010, or 2110 may be formed in a first size. The multiple driving transistors 910 and 920 formed in the middle portion 1120, 1720, 1920, 2020, or 2120 may be formed in a second size that is smaller than the first size. The multiple driving transistors 910 and 920 formed in the peripheral portion 1130, 1730, 1930, 2030, or 2130 may be formed in a third size that is smaller than the second size.

According to an embodiment, a second area for disposition of the multiple driving transistors 910 and 920 included in the middle portion 1120, 1720, 1920, 2020, or 2120 may be reduced compared to a first area for disposition of multiple driving transistors 910 and 920 formed in the center portion 1110, 1710, 1910, 2010, or 2110 so that a first free area is secured, and a size of the second memory 1740 may increase by the first free area.

According to an embodiment, a third area for disposition of the multiple driving transistor 910 and 920 included in the peripheral portion 1130, 1730, 1930, 2030, or 2130 may be reduced compared to the first area for disposition of the multiple driving transistors 910 and 920 formed in the center portion 1110, 1710, 1910, 2010, or 2110 so that a second free area is secured, and a size of the third memory 1750 may increase by the second free area.

According to an embodiment, the first memory 930 may include a memory area of 8 bits, the second memory 1740 may include a memory area of 9 bits, and the third memory 1750 may include a memory area of 10 bits.

## Claims

1. An electronic device (200), comprising:
a display portion (220) including a display (1100) on which multiple pixels are disposed;
a display driving circuit portion (320) configured to drive the display (1100);
a processor (120) operatively connected to the display driving circuit portion (320); and
memory (130) operatively connected to the processor (120),
wherein the display (1100) includes a center portion (1110), a peripheral portion (1130) spaced apart from the center portion (1110), and a middle portion (1120) positioned between the center portion (1110) and the peripheral portion (1130),
wherein the center portion (1110), the middle portion (1120), and the peripheral portion (1130) includes pixel driving circuits configured to drive light-emitting elements disposed on the multiple pixels,
wherein each of the pixel driving circuits includes at least one driving transistor configured to supply the light-emitting elements with a voltage for driving the light-emitting elements, memory in which gradation data is stored, a pulse width modulation, PWM, signal outputting unit configured to output one of multiple PWM signals according to the gradation data stored in the memory, and a PWM signal switch configured to be turned on or off by a PWM signal to control output of the voltage for driving the light-emitting elements;
the electronic device being **characterized in that**:
a first memory (1230), disposed on a first pixel included in the center portion (1110), has a first memory area of i bits of storage space,
a second memory (1240), disposed on a second pixel included in the middle portion (1120), has a second memory area of j bits of storage space, and
a third memory (1250), disposed on a third pixel included in the peripheral portion (1130), has a third memory area of k bits of storage space,
wherein k is greater than j which is greater than i.

2. The electronic device (200) of claim 1, wherein a first pixel driving circuit disposed in the center portion includes multiple driving transistors of the pixel driving circuits, and a second pixel driving circuit disposed in the middle portion (1120) includes a single driving transistor of the pixel driving circuits.

3. The electronic device (200) of claim 2,
wherein a second area for disposition of the single driving transistor formed in the middle portion (1120) is reduced compared to a first area for disposition of the multiple driving transistors formed in the center portion to secure a first free area, and
wherein a size of the second memory increases by the first free area.

4. The electronic device (200) of claim 2, wherein a third pixel driving circuit disposed in the peripheral portion (1130) of the pixel driving circuits includes a single driving transistor.

5. The electronic device (200) of claim 4,
wherein a third area for disposition of the single driving transistor formed in the peripheral portion (1130) is reduced compared to a first area for disposition of the multiple driving transistors formed in the center portion to secure a second free area, and
wherein a size of the third memory increases by the second free area.

6. The electronic device of any one of claims 3 to 5, wherein the i=8, j=9 and k=10.

7. The electronic device (200) of claim 4, wherein first light-emitting elements disposed in the center portion emit light in a gradation of 0 to 255 steps, second light-emitting elements disposed in the middle portion (1120) emit light in a gradation of 0 to 511 steps, and third light-emitting elements disposed in the peripheral portion (1130) emit light in a gradation of 0 to 1023 steps.

8. The electronic device (200) of claim 1, wherein the display portion (220) includes:
an optical barrier configured to guide paths of light emitted from the light-emitting elements and light incident from an outside,
a combiner optics configured to combine and output light emitted from the light-emitting elements and light incident from the outside, and
a lens configured to guide light emitted from the light-emitting elements to the combiner optics.

## Patentansprüche

1. Elektronische Vorrichtung (200), umfassend:
einen Anzeigeabschnitt (220), der eine Anzeige (1100) beinhaltet, auf der mehrere Pixel angeordnet sind;
einen Anzeigetreiberschaltungsabschnitt (320), der dazu ausgelegt ist, die Anzeige (1100) anzusteuern;
einen Prozessor (120), der mit dem Anzeigetreiberschaltungsabschnitt (320) wirkverbunden ist; und
einen Speicher (130), der mit dem Prozessor (120) wirkverbunden ist,
wobei die Anzeige (1100) einen zentralen Abschnitt (1110), einen Randabschnitt (1130), der von dem zentralen Abschnitt (1110) beabstandet ist, und einen mittleren Abschnitt (1120), der zwischen dem zentralen Abschnitt (1110) und dem Randabschnitt (1130) positioniert ist, beinhaltet,
wobei der zentrale Abschnitt (1110), der mittlere Abschnitt (1120) und der Randabschnitt (1130) Pixeltreiberschaltungen beinhalten, die dazu ausgelegt sind, Leuchtelemente anzusteuern, die an den mehreren Pixeln angeordnet sind,
wobei die Pixeltreiberschaltungen jeweils mindestens einen Treibertransistor, der dazu ausgelegt ist, den Leuchtelementen eine Spannung zum Ansteuern der Leuchtelemente zuzuführen, einen Speicher, in dem Abstufungsdaten gespeichert sind, eine Pulsweitenmodulations-, PWM-, Signalausgabeeinheit, die dazu ausgelegt ist, eines von mehreren PWM-Signalen gemäß den in dem Speicher gespeicherten Abstufungsdaten auszugeben, und einen PWM-Signalschalter, der dazu ausgelegt ist, durch ein PWM-Signal ein- oder ausgeschaltet zu werden, um eine Ausgabe der Spannung zum Ansteuern der Leuchtelemente zu steuern, beinhaltet;
wobei die elektronische Vorrichtung **dadurch gekennzeichnet ist, dass**:
ein erster Speicher (1230), der an einem ersten Pixel angeordnet ist, das in dem zentralen Abschnitt (1110) enthalten ist, einen ersten Speicherbereich von i Bits Speicherplatz aufweist,
ein zweiter Speicher (1240), der an einem zweiten Pixel angeordnet ist, das in dem mittleren Abschnitt (1120) enthalten ist, einen zweiten Speicherbereich von j Bits Speicherplatz aufweist und
ein dritter Speicher (1250), der an einem dritten Pixel angeordnet ist, das in dem Randabschnitt (1130) enthalten ist, einen dritten Speicherbereich von k Bits Speicherplatz aufweist,
wobei k größer als j ist, das größer als i ist.

2. Elektronische Vorrichtung (200) nach Anspruch 1, wobei eine erste Pixeltreiberschaltung, die in dem zentralen Abschnitt angeordnet ist, mehrere Treibertransistoren der Pixeltreiberschaltungen beinhaltet und eine zweite Pixeltreiberschaltung, die in dem mittleren Abschnitt (1120) angeordnet ist, einen einzelnen Treibertransistor der Pixeltreiberschaltungen beinhaltet.

3. Elektronische Vorrichtung (200) nach Anspruch 2,
wobei ein zweiter Bereich zur Anordnung des einzelnen Treibertransistors, der in dem mittleren Abschnitt (1120) ausgebildet ist, im Vergleich zu einem ersten Bereich zur Anordnung der mehreren Treibertransistoren, der in dem zentralen Abschnitt ausgebildet ist, verringert ist, um einen ersten freien Bereich zu sichern, und
wobei sich eine Größe des zweiten Speichers um den ersten freien Bereich erhöht.

4. Elektronische Vorrichtung (200) nach Anspruch 2, wobei eine dritte Pixeltreiberschaltung, die in dem Randabschnitt (1130) der Pixeltreiberschaltungen angeordnet ist, einen einzelnen Treibertransistor beinhaltet.

5. Elektronische Vorrichtung (200) nach Anspruch 4,
wobei ein dritter Bereich zur Anordnung des einzelnen Treibertransistors, der in dem Randabschnitt (1130) ausgebildet ist, im Vergleich zu einem ersten Bereich zur Anordnung der mehreren Treibertransistoren, der in dem zentralen Abschnitt ausgebildet ist, verringert ist, um einen zweiten freien Bereich zu sichern, und
wobei sich eine Größe des dritten Speichers um den zweiten freien Bereich erhöht.

6. Elektronische Vorrichtung nach einem der Ansprüche 3 bis 5, wobei das i=8, j=9 und k=10.

7. Elektronische Vorrichtung (200) nach Anspruch 4, wobei erste Leuchtelemente, die in dem zentralen Abschnitt angeordnet sind, Licht in einer Abstufung von 0 bis 255 Schritten abgeben, zweite Leuchtelemente, die in dem mittleren Abschnitt (1120) angeordnet sind, Licht in einer Abstufung von 0 bis 511 Schritten abgeben und dritte Leuchtelemente, die in dem Randabschnitt (1130) angeordnet sind, Licht in einer Abstufung von 0 bis 1023 Schritten abgeben.

8. Elektronische Vorrichtung (200) nach Anspruch 1, wobei der Anzeigeabschnitt (220) Folgendes beinhaltet:
eine optische Barriere, die dazu ausgelegt ist, Wege von Licht, das von den Leuchtelementen abgebeben wird, und Licht, das von außen einfällt, zu leiten,
eine Kombiniereroptik, die dazu ausgelegt ist, Licht, das von den Leuchtelementen abgebeben wird, und Licht, das von außen einfällt, zu kombinieren und auszugeben, und
eine Linse, die dazu ausgelegt ist, Licht, das von den Leuchtelementen abgebeben wird, zu der Kombiniereroptik zu leiten.

## Revendications

1. Dispositif électronique (200) comprenant :
une partie d'affichage (220) comportant un affichage (1100) sur lequel sont disposés plusieurs pixels ;
une partie de circuit de pilotage d'affichage (320) configurée de manière à piloter l'affichage (1100) ;
un processeur (120) relié de façon opérationnelle à la partie de circuit de pilotage d'affichage (320) ; et
une mémoire (130) reliée de façon opérationnelle au processeur (120),
dans lequel l'affichage (1100) comporte une partie centrale (1110), une partie périphérique (1130) espacée de la partie centrale (1110) et une partie médiane (1120) positionnée entre la partie centrale (1110) et la partie périphérique (1130),
dans lequel la partie centrale (1110), la partie médiane (1120) et la partie périphérique (1130) comportent des circuits de pilotage de pixels configurés de manière à piloter des éléments électroluminescents disposés sur les multiples pixels,
dans lequel chacun des circuits de pilotage de pixels comporte au moins un transistor de pilotage configuré de manière à fournir aux éléments électroluminescents une tension de pilotage des éléments électroluminescents, une mémoire dans laquelle sont stockées des données de gradation, une unité de sortie de signal de modulation de largeur d'impulsion, PWM, configurée de manière à délivrer l'un des multiples signaux PWM en fonction des données de gradation stockées dans la mémoire, et un interrupteur de signal PWM configuré de manière à être rendu passant ou bloqué par un signal PWM pour commander la délivrance de la tension de pilotage des éléments électroluminescents ;
le dispositif électronique étant **caractérisé en ce que** :
une première mémoire (1230), disposée sur un premier pixel inclus dans la partie centrale (1110), présente une première zone mémoire de i bits d'espace de stockage,
une deuxième mémoire (1240), disposée sur un deuxième pixel inclus dans la partie médiane (1120), présente une deuxième zone mémoire de j bits d'espace de stockage, et
une troisième mémoire (1250), disposée sur un troisième pixel inclus dans la partie périphérique (1130), présente une troisième zone mémoire de k bits d'espace de stockage,
où k est supérieur à j qui est supérieur à i.

2. Dispositif électronique (200) selon la revendication 1, dans lequel un premier circuit de pilotage de pixels disposé dans la partie centrale comporte plusieurs transistors de pilotage des circuits de pilotage de pixels, et un deuxième circuit de pilotage de pixels disposé dans la partie médiane (1120) comporte un seul transistor de pilotage des circuits de pilotage de pixels.

3. Dispositif électronique (200) selon la revendication 2,
dans lequel une deuxième zone de disposition du seul transistor de pilotage formée dans la partie médiane (1120) est réduite par rapport à une première zone de disposition des multiples transistors de pilotage formée dans la partie centrale pour sécuriser une première zone libre, et
dans lequel une taille de la deuxième mémoire augmente de la première zone libre.

4. Dispositif électronique (200) selon la revendication 2, dans lequel un troisième circuit de pilotage de pixels disposé dans la partie périphérique (1130) des circuits de pilotage de pixels comporte un seul transistor de pilotage.

5. Dispositif électronique (200) selon la revendication 4,
dans lequel une troisième zone de disposition du seul transistor de pilotage formée dans la partie périphérique (1130) est réduite par rapport à une première zone de disposition des multiples transistors de pilotage formée dans la partie centrale pour sécuriser une deuxième zone libre, et
dans lequel une taille de la troisième mémoire augmente de la deuxième zone libre.

6. Dispositif électronique selon l'une des revendications 3 à 5, dans lequel i = 8, j = 9 et k = 10.

7. Dispositif électronique (200) selon la revendication 4, dans lequel des premiers éléments électroluminescents disposés dans la partie centrale émettent de la lumière selon une gradation de 0 à 255 pas, des deuxièmes éléments électroluminescents disposés dans la partie médiane (1120) émettent de la lumière selon une gradation de 0 à 511 pas, et des troisièmes éléments électroluminescents disposés dans la partie périphérique (1130) émettent de la lumière selon une gradation de 0 à 1023 pas.

8. Dispositif électronique (200) selon la revendication 1, dans lequel la partie d'affichage (220) comporte :
une barrière optique configurée de manière à guider des trajectoires de la lumière émise par les éléments électroluminescents et de la lumière incidente provenant d'un extérieur,
une optique de combineur configurée de manière à combiner et délivrer la lumière émise par les éléments électroluminescents et la lumière incidente provenant de l'extérieur, et
une lentille configurée de manière à guider la lumière émise par les éléments électroluminescents vers l'optique de combineur.
